(19) Europäisches Patentamt / European Patent Office / Office européen des brevets

(11) EP 2 221 769 B1

(12) EUROPEAN PATENT SPECIFICATION

(45) Date of publication and mention
of the grant of the patent:
**02.01.2013 Bulletin 2013/01**

(51) Int Cl.:
**G06T 15/40** (2011.01)     **G06T 15/60** (2006.01)

(21) Application number: **09005572.4**

(22) Date of filing: **21.04.2009**

(54) **Rendering processing apparatus and computer-readable storage medium having rendering processing program stored therein**

Rendering-Verarbeitungsvorrichtung und computerlesbares Speichermedium mit darauf gespeichertem Rendering-Verarbeitungsprogramm

Appareil de traitement de rendu et support de stockage lisible sur ordinateur stockant un programme de traitement de rendu

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **20.02.2009 JP 2009038450**

(43) Date of publication of application:
**25.08.2010 Bulletin 2010/34**

(73) Proprietor: **Nintendo Co., Ltd.**
**Kyoto 601-8501 (JP)**

(72) Inventor: **Dohta, Takuhiro**
**Kyoto-shi Kyoto 601-8501 (JP)**

(74) Representative: **Lang, Johannes et al**
**Bardehle Pagenberg Partnerschaft**
**Patentanwälte, Rechtsanwälte**
**Prinzregentenplatz 7**
**81675 München (DE)**

(56) References cited:
**US-A- 5 742 749     US-B1- 6 384 822**
**US-B1- 6 618 048     US-B1- 7 119 806**

**Description**

BACKGROUND OF THE INVENTION

Field of the Invention

The present invention relates to an image processing for a three-dimensional image, and more particularly to an image processing for rendering a three-dimensional virtual space by performing perspective projection transformation and depth comparison using a Z buffer.

Description of the Background Art

Conventionally, a technique for rending a three-dimensional image by using a so-called Z buffer algorithm is known. Further, as one of techniques for rendering a shadow and a boundary portion in a three-dimensional image, used is a technique in which polygons corresponding to the shadow and the boundary portion are produced and the polygons are rendered so as to be slightly floated.

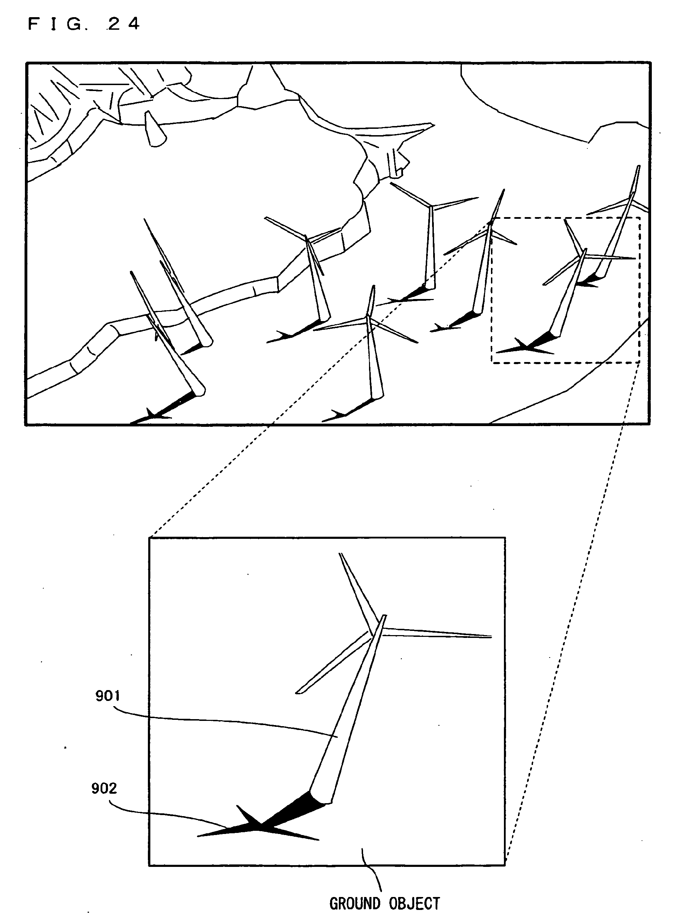

For example, when an object of a windmill and a shadow of the windmill are rendered in a three-dimensional virtual space, a windmill object 901 is positioned on the ground as shown in FIG. 24. On the other hand, a polygon 902 of the shadow is independently produced, and is positioned so as to be slightly floated above the ground (a position at which the shadow is positioned is separately calculated in consideration of a light source), thereby performing rendering process. The windmill object and the shadow are thus rendered so as to produce a realistic three-dimensional image.

Further, for example, in order to prevent a boundary portion between a road and lawn from being too clear, the rendering process is performed such that a polygon for obscuring a boundary covers the boundary portion.

In general, a process (so-called rendering pipeline) for rendering a three-dimensional image includes three process steps, that is, a processing based on a vertex shader, rasterization, and a processing based on a pixel shader. In the processing based on the vertex shader, various coordinate transformations are performed. In a process called perspective projection transformation (or a process called projection transformation) included in the various coordinate transformations, a Z value representing a depth from a screen surface is calculated. At this time, the Z value is typically calculated by using the following equation.

$$\mathtt{Z\ value=1+N\times(1+F/Cz)/(F-N)\ \cdots\ Equation\ 1}$$

wherein a variable Cz represents a Z component (the depth direction as viewed from a screen is set to a negative direction) in a camera space coordinate system, and a variable N represents a near value of a clip plane used for the perspective projection transformation, and a variable F represents a far value of the clip plane used for the perspective projection transformation.

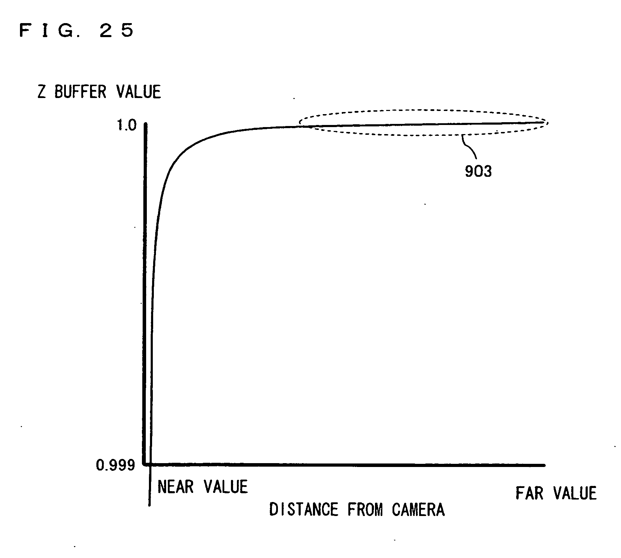

Furthermore, a relationship between a Z value calculated by using Equation 1 and a distance from a virtual camera is represented by, for example, a graph shown in FIG. 25. In FIG. 25, the longitudinal axis represents Z buffer values, and the horizontal axis represents distances from the virtual camera. In FIG. 25, the longitudinal axis represents values raging from 0. 999 to 1.0. This is because if the longitudinal axis represents values raging from 0 to 1.0, the graph is squashed, and becomes difficult to read. On the other hand, on the horizontal axis, the near value is set to 1.0, and the far value is set to 120000. In the graph, the greater the distance from the virtual camera is, the less accurately the Z value is represented (as indicated in, for example, a portion enclosed by an ellipse 903 shown in FIG. 25). Specifically, the gradient of the graph is substantially reduced, and one Z value corresponds to a substantially wide range of values each representing the distance from the camera.

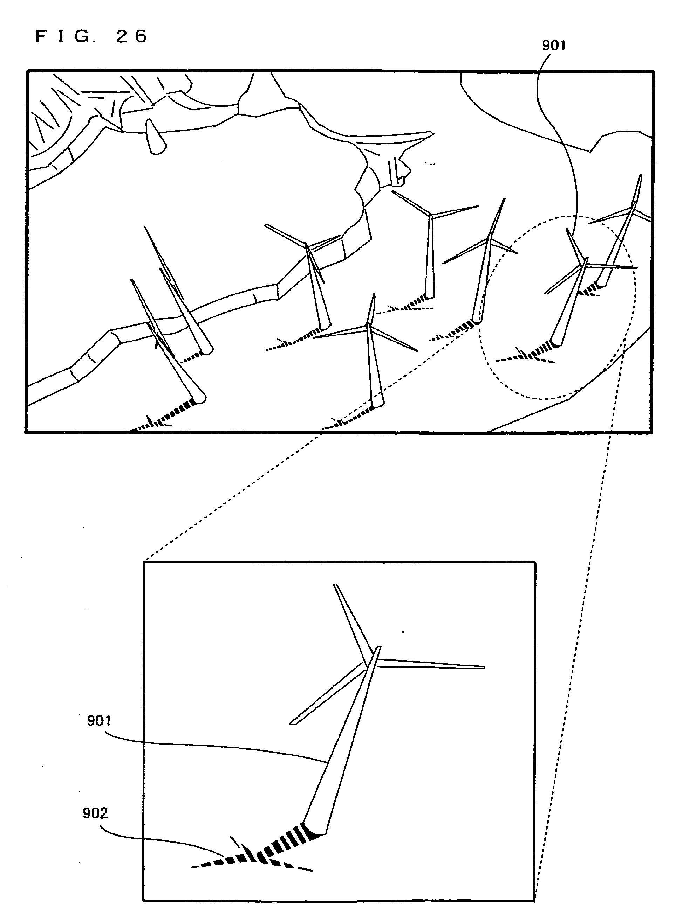

When a polygon is slightly floated like the polygon of the shadow described above, a distance between a polygon of the ground and the polygon of the shadow is substantially small. In other words, the Z value of the polygon of the ground may be approximately equal to the Z value of the polygon of the shadow. Therefore, images having the same Z value are rendered at almost the same position or a relationship in depth (which one is in front of the other) between the images is reversed in a portion in which both the shadow polygon and the ground (polygon) are to be rendered as indicated in an example shown in FIG. 24. This is because the accuracy is reduced as described above, and an error in Z value stored in the Z buffer, which is caused by a limit of a resolution of the Z value, occurs (the number of bits used for the Z buffer is limited, and therefore a calculation error may be caused by, for example, rounding) depending on the distance from the virtual camera (in particular, when the distance from the virtual camera is great). As a result, a problem arises that a produced three-dimensional image flickers in a portion of the polygon of the shadow and the like, as shown in FIG. 26.

A technique for solving the flickering caused by the error in Z value stored in the Z buffer is disclosed in, for example, Japanese Laid-Open Patent Publication No. 2005-173866. A three-dimensional image display apparatus disclosed in Japanese Laid-Open Patent Publication No. 2005-173866 performs rendering process based on tone rendering. The three-dimensional image display apparatus extracts a contour of an object, and renders an outline (to be accurate, an outline polygon, which corresponds to the polygon which is slightly floated) of the extracted contour. The outline is rendered so as to have an increased thickness toward the outside direction, thereby suppressing the flickering of the outline and the object. Specifically, by thickening the outline as described above, the outline is rendered such that the object and the outline do not overlap each other.

However, the three-dimensional image display apparatus as described above has the following problems. The three-dimensional image display apparatus performs rendering by thickening the outline. In other words, the three-dimensional image display apparatus performs a transformation process for thickening the outline (polygon). Therefore, costs for the processing for transforming the outline are additionally needed. Further, a problem arises that, when the polygon is transformed for suppressing the flickering as described above, the resultant three-dimensional image may be an image different from an image intended by a developer and/or may have a design different from a design intended by a developer.

US 5,742,749 discloses a method and apparatus for shadow generation through depth mapping. A depth map is created by z-buffering in a rendering process and then used to generate a shadowing coefficient for each pixel.

US 7,119,806 discloses a system and method for shadow mapping. Shadow mapping is achieved by a two-step technique wherein depth values are generated in a rendering step and later used in offset biasing.

SUMMARY OF THE INVENTION

Therefore, an object of the present invention is to provide a rendering processing apparatus capable of preventing flickering caused by an error in Z value stored in a Z buffer, with increase of cost for processing being suppressed.

This object is achieved by the invention as defined in claims 1 and 8; embodiments of the invention are defined in the dependent claims.

The present invention has the following features to attain the object mentioned above. The reference numerals, supplementary descriptions and the like in the parentheses in the following description indicate an exemplary correspondence with the embodiment described below in order to aid in understanding the present invention and are not intended to limit, in any way, the scope of the present invention.

A first aspect of the present invention is directed to a rendering processing apparatus which renders a three-dimensional virtual space by using a perspective projection transformation and a depth comparison that uses a Z buffer, and the rendering processing apparatus comprises: first rendering means (10); second rendering means (10); and calculation parameter change means (10). The first rendering means performs a first rendering process for rendering at least one first-type polygon included in polygons to be rendered in a rendering process of one frame, the at least one first-type polygon being classified as a first type. The second rendering means performs a second rendering process for rendering at least one second-type polygon included in the polygons to be rendered in the rendering process of the one frame, the at least one second-type polygon being classified as a second type. The calculation parameter change means changes a parameter used for calculating, in the perspective projection transformation, a depth value used for the depth comparison that uses the Z buffer such that the depth value calculated in the first rendering process indicates a position which is closer to a virtual camera than the depth value calculated in the second rendering process. The second rendering means performs the second rendering process for rendering the at least one second-type polygon by using the parameter acquired from the calculation parameter change means.

According to the first aspect, it is possible to prevent flickering caused by an error in Z value stored in a Z buffer, thereby displaying a three-dimensional image.

In a second aspect based on the first aspect, the calculation parameter change means changes the parameter such that at least one of a position of a near clip plane and a position of a far clip plane, both of which are used by the first rendering means, is changed.

In a third aspect based on the second aspect, the calculation parameter change means changes the parameter such that a distance between the virtual camera and the at least one of the position of the near clip plane and the position of the far clip plane is increased.

According to the second and the third aspects, as the depth value calculated in the perspective projection transformation of the second rendering process, a value representing a position which is closer to the virtual camera than a position represented by the depth value calculated in the first rendering process can be calculated without transforming a polygon model in a space based on the world coordinate system.

In a fourth aspect based on the first aspect, the calculation parameter change means changes the parameter by setting a predetermined offset value to be added to the depth value calculated in the perspective projection transformation.

In a fifth aspect based on the fourth aspect, the calculation parameter change means sets the predetermined offset value by changing a parameter indicating a range of values which are stored in the Z buffer and used in the perspective projection transformation.

According to the fourth and the fifth aspects, it is possible to prevent flickering caused by an error in Z value stored in the Z buffer without increasing cost for processing.

In a sixth aspect based on the first aspect, the at least one second-type polygon is positioned, in the three-dimensional virtual space, adjacent to a predetermined one of the at least one first-type polygon, so as to be closer to the virtual camera than the predetermined one of the at least one first-type polygon.

According to the sixth aspect, it is certain that, as a result of the depth comparison using the Z buffer, a predetermined one of the at least one second-type polygon is determined as being closer to the virtual camera than the predetermined one of the at least one first-type polygon.

In a seventh aspect based on the first aspect, each of the first rendering process performed by the first rendering means and the second rendering process performed by the second rendering means includes: a first transformation process for transforming a coordinate of a polygon in a world coordinate system to a coordinate in a camera coordinate system; a second transformation process for subjecting the coordinate in the camera coordinate system to a perspective transformation, the coordinate in the camera coordinate system being obtained through the first transformation process; a third transformation process for transforming a coordinate obtained through the perspective transformation, to a coordinate in a view port coordinate system; and a Z comparison process for rendering a pixel in accordance with the depth comparison that uses the Z buffer.

According to the seventh aspect, while a three-dimensional image rendering process which is typically used is utilized, the flickering caused by an error in Z value stored in the Z buffer can be prevented without increasing cost for processing, thereby displaying a three-dimensional image.

An eighth aspect of the present invention is directed to a computer-readable storage medium having stored therein a rendering processing program executed by a computer of a rendering processing apparatus which renders a three-dimensional virtual space by using a perspective projection transformation and a depth comparison that uses a Z buffer, and the computer is caused to function as: first rendering means (S11, S12, S13); second rendering means (S15, S16); and calculation parameter change means (S14). The first rendering means performs a first rendering process for rendering at least one first-type polygon included in polygons to be rendered in a rendering process of one frame, the at least one first-type polygon being classified as a first type. The second rendering means performs a second rendering process for rendering at least one second-type polygon included in the polygons to be rendered in the rendering process of the one frame, the at least one second-type polygon being classified as a second type. The calculation parameter change means changes a parameter used for calculating, in the perspective projection transformation, a depth value used for the depth comparison that uses the Z buffer such that the depth value calculated in the first rendering process indicates a position which is closer to a virtual camera than the depth value calculated in the second rendering process. The second rendering means performs the second rendering process for rendering the at least one second-type polygon by using the parameter acquired from the calculation parameter change means.

In a ninth aspect based on the eighth aspect, the calculation parameter change means changes the parameter such that at least one of a position of a near clip plane and a position of a far clip plane, both of which are used by the first rendering means, is changed.

In a tenth aspect based on the ninth aspect, the calculation parameter change means changes the parameter such that a distance between the virtual camera and the at least one of the position of the near clip plane and the position of the far clip plane is increased.

In an eleventh aspect based on the eighth aspect, the calculation parameter change means changes the parameter by setting a predetermined offset value to be added to the depth value calculated in the perspective projection transformation.

In a twelfth aspect based on the eleventh aspect, the calculation parameter change means sets the predetermined offset value by changing a parameter indicating a range of values which are stored in the Z buffer and used in the perspective projection transformation.

In a thirteenth aspect based on the eighth aspect, the second rendering means renders the at least one second-type polygon so as to be displayed translucent.

According to the thirteenth aspect, it is possible to render a three-dimensional image with enhanced reality.

In a fourteenth aspect based on the eighth aspect, the at least one second-type polygon is positioned, in the three-dimensional virtual space, adjacent to a predetermined one of the at least one first-type polygon, so as to be closer to the virtual camera than the predetermined one of the at least one first-type polygon.

In a fifteenth aspect based on the eighth aspect, each of the first rendering process performed by the first rendering means and the second rendering process performed by the second rendering means includes: a first transformation process (S34) for transforming a coordinate of a polygon in a world coordinate system to a coordinate in a camera coordinate system; a second transformation process (S36) for subjecting the coordinate in the camera coordinate system to a perspective transformation, the coordinate in the camera coordinate system being obtained through the first transformation process; a third transformation process (S37) for transforming a coordinate obtained through the perspective transformation, to a coordinate in a view port coordinate system; and a Z comparison process (S40, S41, S42) for rendering a pixel in accordance with the depth comparison that uses the Z buffer.

The computer-readable storage medium having stored therein the rendering processing program of the present invention enables the same effect as obtained by the rendering process apparatus according to the present invention.

According to the present invention, it is possible to prevent flickering caused by an error in Z value stored in a Z buffer while suppressing increase of cost for processing performed by a computer.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is an external view illustrating a game system 1 according to an embodiment of the present invention;
FIG. 2 is a functional block diagram of a game apparatus 3 shown in FIG. 1;
FIG. 3 is a perspective view of a controller 7 shown in FIG. 1 as viewed from the top rear side thereof;
FIG. 4 is a perspective view of the controller 7 shown in FIG. 3 as viewed from the bottom front side thereof;
FIG. 5 is a perspective view illustrating a state where an upper housing of the controller 7 shown in FIG. 3 is removed;
FIG. 6 is a perspective view illustrating a state where a lower housing of the controller 7 shown in FIG. 3 is removed;
FIG. 7 is a block diagram illustrating a structure of the controller 7 shown in FIG. 3;
FIG. 8 shows an exemplary game image according to an embodiment of the present invention;
FIG. 9 is a diagram illustrating a difference between a near value and a far value used for rendering a normal polygon and a near value and a far value used for rendering a floated polygon;
FIG. 10 is a diagram illustrating change of settings of the far value and the near value;
FIG. 11 is a diagram illustrating change of settings of the far value and the near value;
FIG. 12 is a diagram illustrating change of settings of the far value and the near value;
FIG. 13 is a diagram illustrating change of settings of the far value and the near value;
FIG. 14 is a diagram illustrating change of settings of the far value and the near value;
FIG. 15 is a diagram illustrating change of settings of the far value and the near value;
FIG. 16 is a diagram illustrating a memory map of an external main memory 12 of the game apparatus 3;
FIG. 17 is a diagram illustrating an exemplary data structure of a clipping setting table 126;
FIG. 18 is a flow chart showing in detail a game process according to an embodiment of the present invention;
FIG. 19 is a flow chart showing in detail a rendering process of step S2 shown in FIG. 18;
FIG. 20 is a flow chart showing in detail a polygon rendering process of step S13 shown in FIG. 19;
FIG. 21 is a diagram illustrating an outline of a second embodiment;
FIG. 22 is a diagram illustrating an outline of the second embodiment;
FIG. 23 is a flow chart showing in detail a rendering process according to the second embodiment;
FIG. 24 shows an exemplary three-dimensional image;
FIG. 25 shows a graph representing a relationship between a Z value and a distance from a virtual camera; and
FIG. 26 shows an exemplary three-dimensional image in which flickering occurs.

DESCRIPTION OF THE PREFERRED EMBODIMENTS

(First Embodiment)

(Overall configuration of game system)

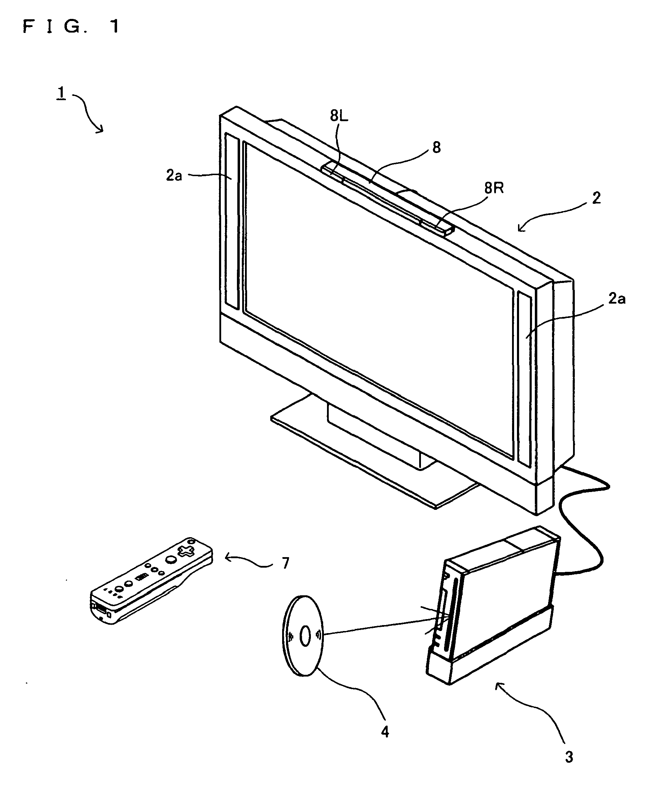

With reference to FIG. 1, a game system 1 including a game apparatus according to embodiments of the present invention will be described. FIG. 1 is an external view illustrating the game system 1. Hereinafter, a game apparatus and a game program according to the embodiments will be described by using a stationary game apparatus as an example. As shown in FIG. 1, the game system 1 includes a television receiver (hereinafter, referred to simply as a "television") 2, a game apparatus 3, an optical disc 4, a controller 7, and a marker section 8. The system allows the game apparatus 3 to execute game processing based on a game played using the controller 7.

Into the game apparatus 3, the optical disc 4, which typifies an information storage medium and is exchangeable with respect to the game apparatus 3, is detachably inserted. In the optical disc 4, the game program executed by the game apparatus 3 is stored. The game apparatus 3 has, on the front surface thereof, an opening through which the optical disc 4 is inserted. The game apparatus 3 executes the game processing by reading and executing the game program stored in the optical disc 4 which is inserted in the game apparatus 3 through the opening.

The game apparatus 3 is connected through a connection cord to the television 2 typifying a display device. The television 2 displays a game image generated through the game processing executed by the game apparatus 3. Further, the marker section 8 is provided in the vicinity of the screen of the television 2 (on the top surface of the screen of the television 2 in FIG. 1). The marker section 8 includes two markers, a marker 8R and a marker 8L, at both ends thereof. Specifically, each of the markers 8R and 8L includes at least one infrared LED, and emits an infrared light forward from the television 2. The marker section 8 is connected to the game apparatus 3, and the game apparatus 3 is capable of controlling each infrared LED included in the marker section 8 so as to be lit up.

The controller 7 is an input device for supplying, to the game apparatus 3, operation data representing a content of an operation performed on the controller 7. The controller 7 is connected to the game apparatus 3 by wireless communication. In the embodiments, for example, the Bluetooth (registered trademark) technology is used for the wireless communication between the controller 7 and the game apparatus 3. In another embodiment, the controller 7 and the game apparatus 3 may communicate with each other by a wired connection.

(Internal structure of game apparatus 3)

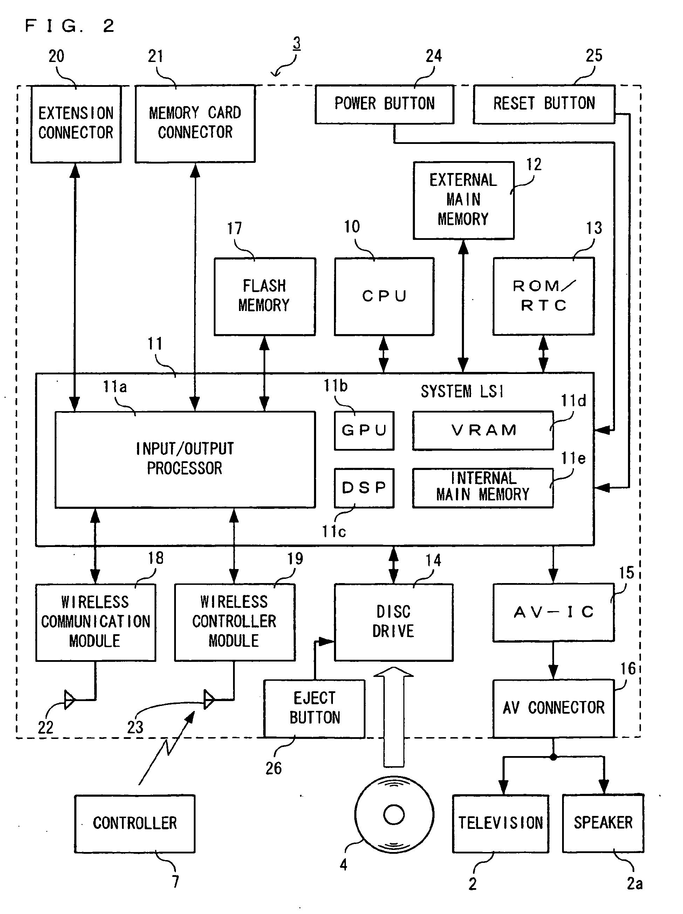

Next, with reference to FIG. 2, an internal structure of the game apparatus 3 will be described. FIG. 2 is a block diagram illustrating a structure of the game apparatus 3. The game apparatus 3 includes: the CPU 10; a system LSI 11; an external main memory 12; a ROM/RTC 13; a disc drive 14; an AV-IC 15, and the like.

The CPU 10, serving as a game processor, executes the game program stored in the optical disc 4 so as to perform the game processing. The CPU 10 is connected to the system LSI 11. In addition to the CPU 10, the external main memory 12, the ROM/RTC 13, the disc drive 14, and the AV-IC 15 are also connected to the system LSI 11. The system LSI 11 performs processing such as control of data transmission between respective components connected thereto, generation of an image to be displayed, and acquisition of data from an external apparatus. An internal structure of the system LSI 11 will be described below. The external main memory 12, which is of a volatile type, stores programs, such as a game program loaded from the optical disc 4 or a flash memory 17, and various data, and is used as a work area and a buffer area for the CPU 10. The ROM/RTC 13 includes a ROM (so-called a boot ROM) incorporating a program for booting the game apparatus 3, and a clock circuit (RTC: real time clock) for counting time. The disc drive 14 reads, from the optical disc 4, program data, texture data and the like, and writes the read data into an internal main memory 11e described below or the external main memory 12.

Provided in the system LSI 11 are an input/output processor 11a, a GPU (graphics processor unit) 11b, a DSP (digital signal processor) 11c, a VRAM 11d, and the internal main memory 11e. These component 11a, 11b, 11c, 11d and 11e are connected to each other via an internal bus not shown.

The GPU 11b, which is a part of rendering means, generates an image in accordance with a graphics command (draw command) supplied from the CPU 10. More specifically, the GPU 11b performs a calculation process necessary for displaying 3D graphics in accordance with the graphics command, such as a process of transforming a 3D coordinate to a 2D coordinate, which corresponds to a preprocessing for rendering, and a final rendering process such as texture mapping, thereby generating game image data. The CPU 10 supplies, to the GPU 11b, a command based on an image generation program necessary for generating the game image data in addition to the graphics command. The VRAM 11d stores data (such as polygon data and texture data) necessary for the GPU 11b to execute the graphics command. When an image is generated, the GPU 11b generates image data by using the data stored in the VRAM 11d.

The DSP 11c functions as an audio processor, and generates audio data by using sound data and sound waveform (tone quality) data stored in the internal main memory 11e and the external main memory 12. The internal main memory 11e stores a program and various data, and is used as a work area and a buffer area for the CPU 10, as with the external main memory 12.

The image data and the audio data generated as described above, are read by the AV-IC 15. The AV-IC 15 outputs the read image data to the television 2 via an AV connector 16, and also outputs the read audio data to a speaker 2a of the television 2. Thus, an image is displayed on the television 2, and a sound is outputted from the speaker 2a.

The input/output processor (I/O processor) 11a executes data reception and transmission among the components connected thereto and download of data from an external apparatus. The I/O processor 11a is connected to the flash memory 17, a wireless communication module 18, a wireless controller module 19, an extension connector 20, and a memory card connector 21. To the wireless communication module 18, an antenna 22 is connected, and to the wireless controller module 19, an antenna 23 is connected.

The I/O processor 11a is connected to a network via the wireless communication module 18 and the antenna 22 so as to communicate with other game apparatuses or various servers connected to the network. The I/O processor 11a accesses the flash memory 17 at regular time intervals so as to detect for data to be transmitted to the network. When the data to be transmitted is detected, the data is transmitted to the network via the wireless communication module 18 and the antenna 22. Further, the I/O processor 11a receives, via the network, the antenna 22 and the wireless communication module 18, data transmitted from the other game apparatuses or data downloaded from a download server, and stores the received data in the flash memory 17. The CPU 10 executes the game program so as to read the data stored in the flash memory 17, thereby using the read data on the game program. The flash memory 17 may store not only the data transmitted and received among the game apparatus 3, and other game apparatuses or the various servers, but also saved data (result data or intermediate step data of the game) of a game played with the game apparatus 3.

Further, the I/O processor 11a receives the operation data transmitted from the controller 7, via the antenna 23 and the wireless controller module 19, and (temporarily) stores the operation data in a buffer area of the internal main memory 11e or the external main memory 12.

Further, the I/O processor 11a is connected to the extension connector 20 and the memory card connector 21. The extension connector 20 is a connector used for interface such as a USB and an SCSI, and is connected to a medium such as an external storage medium, or a peripheral device such as another controller, or a wired communication connector so as to allow communication with the network, without using the wireless communication module 18. The memory card connector 21 is a connector for connecting to the memory card connector 21 the external storage medium such as a memory card. For example, the I/O processor 11a accesses the external storage medium via the extension connector 20 or the memory card connector 21, so as to store data in the external storage medium or read data from the external storage medium.

The game apparatus 3 includes a power button 24, a reset button 25, and an eject button 26. The power button 24 and the reset button 25 are connected to the system LSI 11. When the power button 24 is pressed so as to be ON, the power is supplied to the respective components of the game apparatus 3 via an AC adapter which is not shown. Further, when the power button 24, which is ON, is pressed again, the game apparatus 3 shifts to a low power standby mode. Also in this state, power is being supplied to the game apparatus 3, and therefore the game apparatus 3 continues to be connected to the network such as the Internet. When the power supply, which is ON, is to be OFF, the power supply can be OFF by pressing the power button 24 for a predetermined time period or longer period. When the reset button 25 is pressed, the system LSI 11 restarts a boot program of the game apparatus 3. The eject button 26 is connected to the disc drive 14. When the eject button 26 is pressed, the optical disc 4 is ejected from the disc drive 14.

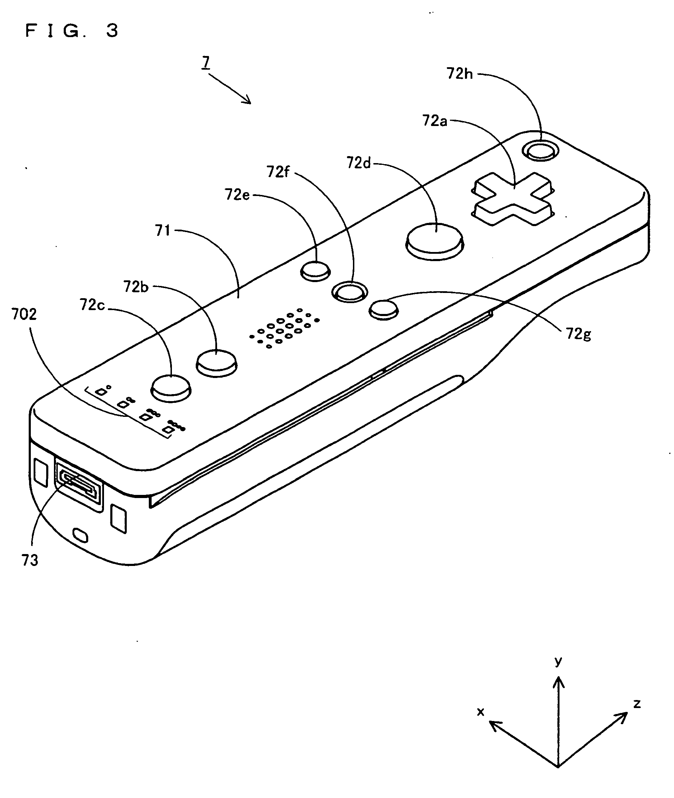

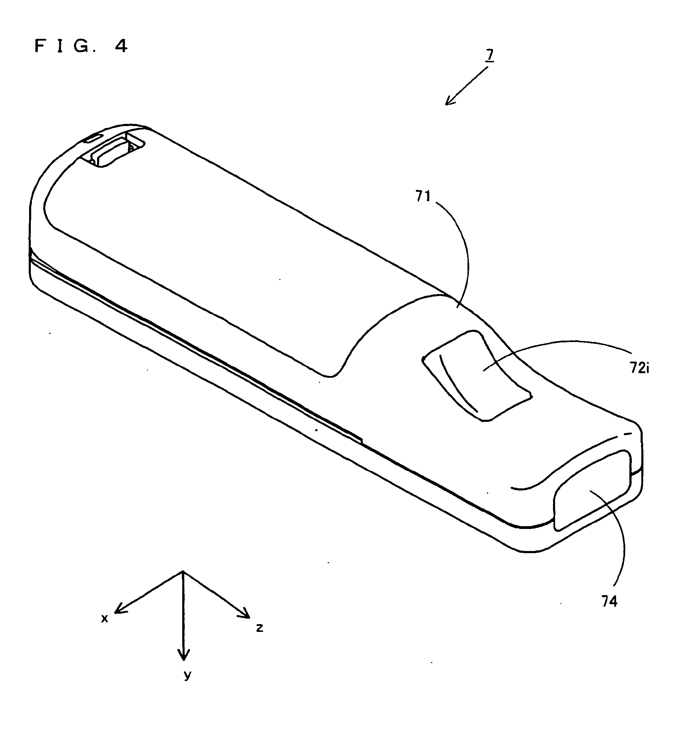

With reference to FIGS. 3 to 4, the controller 7 will be described. FIG. 3 is a perspective view of the controller 7 as viewed from the top rear side thereof. FIG. 4 is a perspective view of the controller 7 as viewed from the bottom front side thereof.

As shown in FIGS. 3 and 4, the controller 7 includes a housing 71, and an operation section 72, having a plurality of operation buttons, provided on a surface of the housing 71. The housing 71 of the embodiments has a generally parallelepiped shape extending in a longitudinal direction from front to rear. The overall size of the housing 71 is small enough to be held by one hand of an adult or even a child, and the housing 71 is formed by, for example, plastic molding.

At the center of the front portion of the top surface of the housing 71, a cross key 72a is provided. The cross key 72a is a cross-shaped four-direction push switch. The cross key 72a includes operation portions corresponding to the four directions (front, rear, right and left), which are located on cross-shaped projecting portions, respectively, arranged at intervals of 90 degrees. A player selects one of the front, rear, right and left directions by pressing a corresponding one of the operation portions of the cross key 72a. Through an operation on the cross key 72a, the player can, for example, indicate a direction in which a player character or the like appearing in a virtual game world is to move or select one of a plurality of options.

Although the cross key 72a is an operation section for outputting an operation signal in accordance with the aforementioned direction input operation performed by the player, such an operation section may be provided in another form. For example, the cross key 72a maybe replaced with an operation section, including four push switches corresponding to directions, respectively, represented by a cross, for outputting an operation signal in accordance with the push switch having been pressed by the player. Alternatively, the cross key 72a may be replaced with an operation section including the aforementioned four push switches and a center switch provided at the center of the cross formed by the four push switches. Alternatively, the cross key 72a may be replaced with an operation section which includes an inclinable stick (so-called a joystick) projecting from the top surface of the housing 71 and outputs an operation signal in accordance with the inclining direction of the stick. Still alternatively, the cross key 72a may be replaced with an operation section which includes a disc-shaped member horizontally slidable and outputs an operation signal in accordance with the sliding direction of the disc-shaped member. Still alternatively, the cross key 72a may be replaced with a touch pad.

Behind the cross key 72a on the top surface of the housing 71, a plurality of operation buttons 72b, 72c, 72d, 72e, 72f and 72g are provided. The operation buttons 72b, 72c, 72d, 72e, 72f and 72g are operation sections for outputting operation signals assigned to the operation buttons 72b, 72c, 72d, 72e, 72f and 72g, respectively, when the player presses a head thereof. For example, the operation buttons 72b, 72c, and 72d are assigned with functions of a first button, a second button, and an A button, for example. Further, the operation buttons 72e, 72f and 72g are assigned with functions of a minus button, a home button and a plus button, for example. The operation buttons 72a, 72b, 72c, 72d, 72e, 72f and 72g are assigned with various operation functions in accordance with the game program executed by the game apparatus 3. In an exemplary arrangement shown in FIG. 3, the operation buttons 72b, 72c and 72d are arranged in a line at the center in the front-rear direction on the top surface of the housing 71. The operation buttons 72e, 72f and 72g are arranged in a line in the left-right direction between the operation buttons 72b and 72d on the top surface of the housing 71. The operation button 72f has a top surface thereof buried in the top surface of the housing 71, so as not to be inadvertently pressed by the player.

In front of the cross key 72a on the top surface of the housing 71, an operation button 72h is provided. The operation button 72h is a power switch for remote-controlling the power of the game apparatus 3 to be on or off. The operation button 72h also has a top surface thereof buried in the top surface of the housing 71, so as not to be inadvertently pressed by the player.

Behind the operation button 72c on the top surface of the housing 71, a plurality of LEDs 702 are provided. The controller 7 is assigned a controller type (number) so as to be distinguishable from the other controllers 7. For example, the LEDs 702 are used for informing the player of the controller type which is currently set to controller 7 that he or she is using. Specifically, when the controller 7 transmits transmission data to the game apparatus 3, one of the plurality of LEDs 702 is lit up so as to correspond to the controller type.

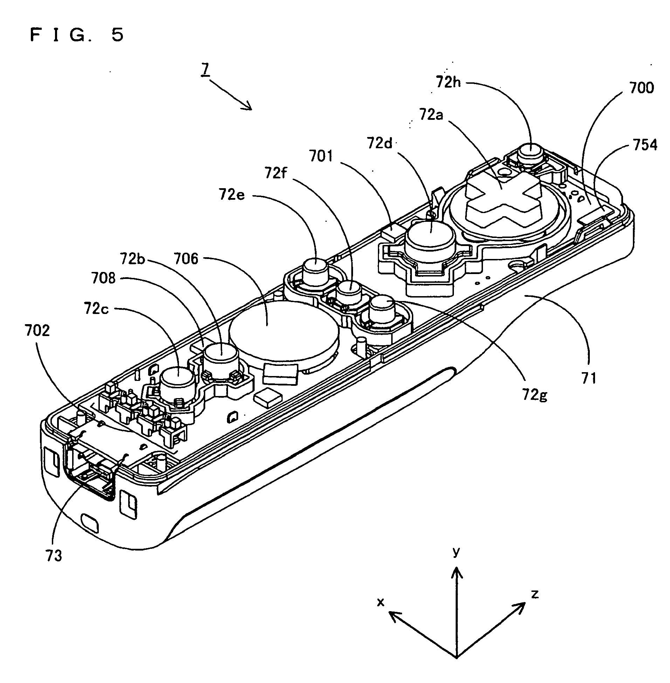

On the top surface of the housing 71, a sound hole for outputting a sound from a speaker (speaker 706 shown in FIG. 5) described below is formed between the operation button 72b and the operation buttons 72e, 72f, and 72g.

On the bottom surface of the housing 71, a recessed portion is formed. As described below in detail, the recessed portion is formed at a position at which an index finger or middle finger of a player is located when the player holds the controller 7 with one hand so as to orient the front surface thereof to the markers 8L and 8R. On a slope surface of the recessed portion on the bottom surface of the housing 71, an operation button 72i is provided. The operation button 72i is an operation section acting as, for example, a B button.

On the front surface of the housing 71, an image pickup element 743 included in the imaging information calculation section 74 is provided. The imaging information calculation section 74 is a system for analyzing image data taken by the controller 7 and detecting the position of the center of gravity, the size and the like of an area having a high brightness in the image data. The imaging information calculation section 74 has, for example, a maximum sampling period of about 200 frames/sec. , and therefore can trace and analyze even a relatively fast motion of the controller 7. The imaging information calculation section 74 will be described below in detail. On the rear surface of the housing 71, a connector 73 is provided. The connector 73 is, for example, an edge connector, and is used for engaging and connecting the controller 7 with, for example, a connection cable.

Here, for giving specific description, a coordinate system is defined for the controller 7. As shown in FIGS. 3 and 4, xyz-axes orthogonal to each other are defined for the controller 7. Specifically, the z-axis is defined along the longitudinal direction of the housing 71 corresponding to the front-rear direction of the controller 7, and the direction toward the front surface (the surface on which the imaging information calculation section 74 is provided) of the controller 7 is defined as the z-axis positive direction. The y-axis is defined along the top-bottom direction of the controller 7, and the direction toward the top surface (the surface on which the operation button 72a and the like are provided) of the housing 71 is defined as the y-axis positive direction. The x-axis is defined along the right-left direction of the controller 7, and the direction toward the left side surface (the side surface shown in FIG. 4 but not shown in FIG. 3) of the housing 71 is defined as the x-axis positive direction.

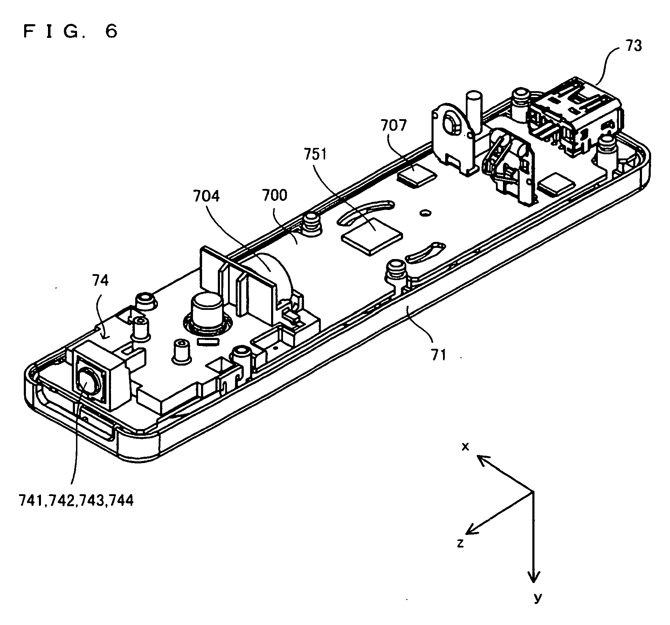

With reference to FIGS. 5 and 6, an internal structure of the controller 7 will be described. FIG. 5 is a perspective view illustrating a state where an upper housing (a part of the housing 71) of the controller 7 is removed, as viewed from the rear surface side of the controller 7. FIG. 6 is a perspective view illustrating a state where a lower housing (a part of the housing 71) of the controller 7 is removed, as viewed from the front surface side of the controller 7. FIG. 6 is a perspective view illustrating a reverse side of a substrate 700 shown in FIG. 5.

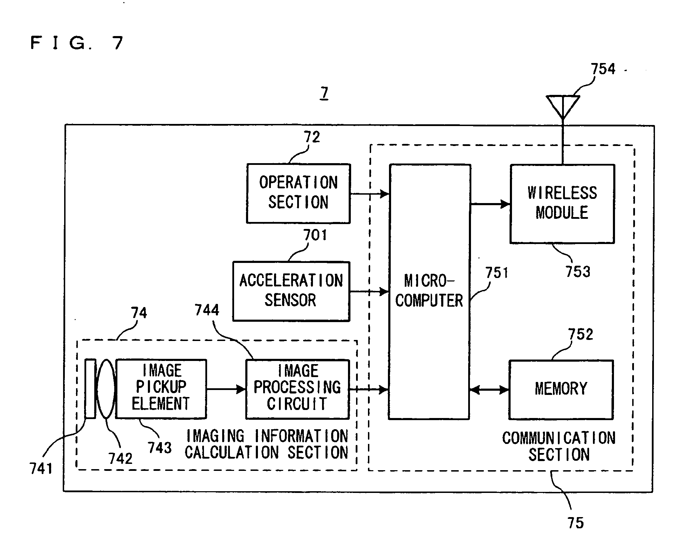

As shown in FIG. 5, the substrate 700 is fixed inside the housing 71. On the top main surface of the substrate 700, the operation buttons 72a, 72b, 72c, 72d, 72e, 72f, 72g and 72h, an acceleration sensor 701, the LEDs 702, an antenna 754 and the like are provided. These elements are connected to a microcomputer 751 (see FIGS. 6 and 7) and the like via lines (not shown) formed on the substrate 700 and the like. The microcomputer 751 is exemplary button data generation means of the present invention, and functions so as to generate operation button data in accordance with the operation button, such as the operation button 72a, having been pressed. This well-known mechanism is realized by, for example, the microcomputer 751 determining whether a wiring is connected or disconnected by using a switch mechanism including a tact switch positioned under a key top, or the like. More specifically, when a wiring is connected and energized by, for example, pressing an operation button, the microcomputer 751 determines the operation button connected to the energized wiring so as to generate a signal in accordance with the operation button having been pressed.

The wireless module 753 (see FIG. 7) and the antenna 754 allow the controller 7 to act as a wireless controller. A crystal oscillator (not shown), provided in the housing 71, generates a reference clock of the microcomputer 751 described below. On the top main surface of the substrate 700, the speaker 706 and an amplifier 708 are provided. The acceleration sensor 701 is provided to the left of the operation button 72d on the substrate 700 (that is, provided not at the center portion of the substrate 700 but near the periphery of the substrate 700). Accordingly, the acceleration sensor 701 is allowed to detect for both a direction change of the gravitational acceleration and an acceleration containing a component generated due to centrifugal force, in accordance with the controller 7 rotating about the longitudinal direction thereof. Therefore, by performing a predetermined calculation, the game apparatus 3 or the like is allowed to determine the rotation of the controller 7, with preferable accuracy, based on the acceleration data having been detected.

As shown in FIG. 6, at the front edge of the bottom main surface of the substrate 700, the imaging information calculation section 74 is provided. The imaging information calculation section 74 includes an infrared filter 741, a lens 742, the image pickup element 743 and an image processing circuit 744 located in order, respectively, from the front surface of the controller 7 on the bottom main surface of the substrate 700. At the rear edge of the bottom main surface of the substrate 700, the connector 73 is attached. On the bottom main surface of the substrate 700, a sound IC 707 and the microcomputer 751 are provided. The sound IC 707 is connected to the microcomputer 751 and the amplifier 708 via a wiring formed on the substrate 700 and the like, and outputs an audio signal to the speaker 706 via the amplifier 708 in accordance with sound data transmitted from the game apparatus 3.

On the bottom main surface of the substrate 700, a vibrator 704 is provided. The vibrator 704 may be, for example, a vibration motor or a solenoid. The vibrator 704 is connected to the microcomputer 751 by a wiring formed on the substrate 700 or the like, and is controlled so as to be ON/OFF in accordance with vibration data transmitted from the game apparatus 3. The controller 7 is vibrated by an actuation of the vibrator 704, and the vibration is conveyed to the player's hand holding the controller 7. Thus, a so-called vibration-feedback game is realized. The vibrator 704 is positioned slightly in front of the longitudinal center of the housing 71, and therefore a vibration of the housing 71 is enhanced so as to allow a player holding the controller 7 to easily feel the controller 7 vibrating.

With reference to FIG. 7, the internal structure of the controller 7 will be described. FIG. 7 is a block diagram illustrating the structure of the controller 7.

As shown in FIG. 7, the controller 7 includes a communication section 75 in addition to the operation section 72, the imaging information calculation section 74, the acceleration sensor 701, the vibrator 704, the speaker 706, the sound IC 707, and the amplifier 708, which are described above.

The imaging information calculation section 74 includes the infrared filter 741, the lens 742, the image pickup element 743 and the image processing circuit 744. The infrared filter 741 allows only infrared light to pass therethrough, among light incident on the front surface of the controller 7. The lens 742 collects the infrared light which has passed through the infrared filter 741 and outputs the infrared light to the image pickup element 743. The image pickup element 743 is a solid-state image pickup device such as, for example, a CMOS sensor or a CCD. The image pickup element 743 takes an image of the infrared light collected by the lens 742. Accordingly, the image pickup element 743 takes an image of only the infrared light which has passed through the infrared filter 741 and generates image data. The image data generated by the image pickup element 743 is processed by the image processing circuit 744. Specifically, the image processing circuit 744 processes the image data obtained from the image pickup element 743, identifies a spot thereof having a high brightness, and outputs, to the communication section 75, process result data representing a position coordinate point and the area size of the identified spot. The imaging information calculation section 74 is fixed to the housing 71 of the controller 7. The imaging direction of the imaging information calculation section 74 can be changed by changing the direction of the housing 71. A signal corresponding to a position and/or a movement of the controller 7 can be obtained based on the process result data outputted by the imaging information calculation section 74.

The controller 7 preferably includes a three-axis (x-axis, y-axis, and z-axis) acceleration sensor 701. The three-axis acceleration sensor 701 detects a linear acceleration in three directions, i.e., the up/down direction, the left/right direction, and the forward/backward direction. Further, in another embodiment, a two-axis acceleration detection means which detects for only a linear acceleration along each of the up/down and left/right directions (or other pair of directions) may be used depending on the type of control signals used in the game process. For example, the three-axis or two-axis acceleration sensor 701 may be of the type available from Analog Devices, Inc. or STMicroelectronics N.V. The acceleration sensor 701 may be of an electrostatic capacitance (capacitance-coupling) type that is based on silicon micro-machined MEMS (Micro Electro Mechanical Systems) technology. However, an acceleration detection technology (e.g., piezoelectric type or piezoresistance type) now existing or any other suitable technology later developed may be used to provide the three-axis or two-axis acceleration sensor 701.

As one skilled in the art understands, the acceleration detectionmeans, as used in the acceleration sensor 701, are capable of detecting for only an acceleration (linear acceleration) along a straight line corresponding to each axis of the acceleration sensor. In other words, the direct output of the acceleration sensor 701 is limited to signals indicative of linear acceleration (static or dynamic) along each of the two or three axes thereof. As a result, the acceleration sensor 701 cannot directly detect movement along a non-linear (e.g. arcuate) path, rotation, rotational movement, angular displacement, tilt, position, attitude or any other physical characteristic.

However, when a computer such as a processor (for example, the CPU 10) of a game apparatus or a processor (for example, the microcomputer 751) of the controller performs a process based on a signal of an acceleration outputted by the acceleration sensor 701, additional information relating to the controller 7 can be inferred or calculated (determined), as one skilled in the art will readily understand from the description herein. For example, a case where the computer will perform a process assuming that a controller including the acceleration sensor is in a static state (that is, a case where it is anticipated that an acceleration detected by the acceleration sensor will include only a gravitational acceleration) will be described. When the controller is actually in the static state, it is possible to determine whether or not the controller tilts relative to the gravity direction and to also determine a degree of the tilt, based on the acceleration having been detected. Specifically, when a state where 1G (gravitational acceleration) is applied to a detection axis of the acceleration sensor in the vertically downward direction represents a reference, it is possible to determine whether or not the controller tilts relative to the vertically downward direction, based on only whether or not 1G is applied in the direction of the detection axis of the acceleration sensor. Further, it is possible to determine a degree to which the controller tilts relative to the vertically downward direction, based on a magnitude of the acceleration applied in the direction of the detection axis. Further, the acceleration sensor capable of detecting an acceleration in multiaxial directions subjects, to a processing, the acceleration signals having been detected in the respective axes so as to more specifically determine the degree to which the controller tilts relative to the gravity direction. In this case, although the processor may calculate, based on the output from the acceleration sensor 701, data representing an angle at which the controller 7 tilts, an approximate degree to which the controller 7 tilts may be inferred based on the output from the acceleration sensor 701 without calculating the data representing the angle of the tilt. Thus, when the acceleration sensor 701 is used in combination with the processor, the tilt, attitude, or position of the controller 7 can be determined. On the other hand, in a case where it is anticipated that the acceleration sensor will be in a dynamic state, the acceleration sensor detects an acceleration based on a movement of the acceleration sensor, in addition to the gravitational acceleration component. Therefore, when the gravitational acceleration component is eliminated through a predetermined process, it is possible to determine, for example, a direction in which the controller 7 moves. Specifically, when the controller 7 including the acceleration sensor 701 is dynamically accelerated and moved with a hand of a user, it is possible to calculate various movements and/or positions of the controller 7 by processing the acceleration signals generated by the acceleration sensor 701. Even when it is anticipated that the acceleration sensor will be in the dynamic state, the acceleration based on the movement of the acceleration sensor is eliminated through a predetermined process, whereby it is possible to determine the tilt of the controller 7 relative to the gravity direction. In another embodiment, the acceleration sensor 701 may include an embedded signal processor or another type of dedicated processor for performing any desired processing of the acceleration signals outputted by embedded acceleration detection means prior to outputting signals to the microcomputer 751. For example, when the acceleration sensor is intended to detect static acceleration (for example, gravitational acceleration), the embedded or dedicated processor could convert the detected acceleration signal to a corresponding tilt angle (or another preferable parameter).

In another exemplary embodiment, a gyro-sensor incorporating a rotating element, vibrating element, or the like may be used as a movement sensor for detecting for a movement of the controller 7. Exemplary MEMS gyro-sensors that may be used in the embodiments are available from Analog Devices, Inc. Unlike the acceleration sensor 701, a gyro-sensor is capable of directly detecting rotation (or angular rate) around at least one axis defined by the gyroscopic element therein. Thus, due to the fundamental differences between a gyro-sensor and an acceleration sensor, corresponding changes need to be made to the processing operations that are performed on the output signals from these devices depending on which device is selected for a particular application.

More specifically, when the tilt or attitude is calculated using a gyro-sensor instead of the acceleration sensor, significant changes are necessary. Specifically, when using a gyro-sensor, the value of the tilt is initialized at the start of the detection. Then, data on the angular rate which is output from the gyro-sensor is integrated. Next, a change amount in tilt from the value of the tilt initialized is calculated. In this case, the calculated tilt corresponds to an angle. In contrast, when the acceleration sensor calculates the tilt, the tilt is calculated by comparing the value of the gravitational acceleration of each axial component with a predetermined reference. Therefore, the calculated tilt can be represented as a vector. Thus, without initialization, an absolute direction can be determined with acceleration detection means. The type of the value calculated as the tilt is also very different between a gyro sensor and an acceleration sensor; i.e., the value is an angle when a gyro sensor is used and is a vector when an acceleration sensor is used. Therefore, when a gyro sensor is used instead of an acceleration sensor or vice versa, data on tilt also needs to be processed through a predetermined conversion taking into account the fundamental differences between these two devices. Due to the fact that the nature of a gyro sensor is known to one skilled in the art, as well as the fundamental differences between the acceleration detection means and the gyro sensor, further details are not provided herein. While a gyro-sensor is advantageous in that a rotation can be directly detected, an acceleration sensor is generally more cost effective when used in connection with the controller described herein.

The communication section 75 includes the microcomputer 751, a memory 752, the wireless module 753 and the antenna 754. The microcomputer 751 controls the wireless module 753 for wirelessly transmitting the transmission data while using the memory 752 as a storage area during the processing. The microcomputer 751 controls operations of the sound IC 707 and the vibrator 704 based on the data received from the game apparatus 3 by the wireless module 753 via the antenna 754. The sound IC 707 processes the sound data and the like transmitted from the game apparatus 3 via the communication section 75. Further, the microcomputer 751 actuates the vibrator 704 based on, for example, the vibration data (for example, a signal for powering the vibrator 704 ON or OFF) transmitted by the game apparatus 3 via the communication section 75.

Data from the controller 7 including an operation signal (key data) from the operation section 72, acceleration signals (x, y, and z-axial direction acceleration data, and hereinafter, simply referred to as acceleration data) from the acceleration sensor 701, and the process result data from the imaging information calculation section 74 are outputted to the microcomputer 751. The microcomputer 751 temporarily stores the respective input data (the key data, the acceleration data, and process result data) in the memory 752 as the transmission data which is to be transmitted to the wireless controller module 19. The wireless transmission from the communication section 75 to the wireless controller module 19 is performed periodically at predetermined time intervals. Since game processing is generally performed at a cycle of 1/60 sec., data needs to be transmitted at a cycle of a time period shorter than the cycle of the game processing. Specifically, the game process unit is 16.7 ms (1/60 sec.), and the transmission interval of the communication section 75 structured using the Bluetooth (registered trademark) technology is, for example, 5 ms. At a time at which the transmission to the wireless controller module 19 is to be performed, the microcomputer 751 outputs the transmission data stored in the memory 752 as a series of operation information to the wireless module 753. The wireless module 753 uses, for example, the Bluetooth (registered trademark) technology to transmit, from the antenna 754, operation information as a radio wave signal by using a carrier wave of a predetermined frequency. Thus, data from the controller 7 including the key data from the operation section 72, the acceleration data from the acceleration sensor 701, and the process result data from the imaging information calculation section 74 are modulated to a radio wave signal by the wireless module 753, and the radio wave signal is transmitted from the controller 7. The wireless controller module 19 of the game apparatus 3 receives the radio wave signal, and the game apparatus 3 demodulates or decodes the radio wave signal to obtain the series of operation information (the key data, the acceleration data, and the process result data). Based on the obtained operation information and the game program, the CPU 10 of the game apparatus 3 performs the game processing. When the communication section 75 is structured by using the Bluetooth (registered trademark) technology, the communication section 75 can function so as to receive transmission data which is wirelessly transmitted from another device.

Next, an outline of a rendering process according to the present embodiment will be described. In the present embodiment, an image of a three-dimensional virtual space is taken by a virtual camera, and the taken image is rendered. Further, in the present embodiment, the rendering process is performed by using a so-called Z buffer algorithm.

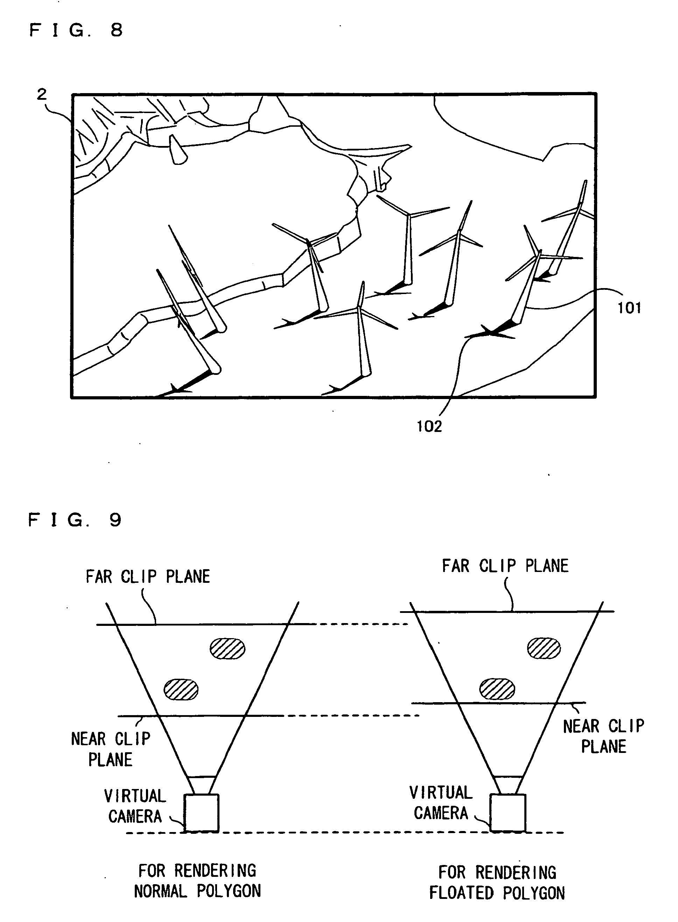

Further, in the present embodiment, used is a technique in which, in order to represent a shadow of a windmill object 101 and the like, a polygon 102 for the shadow is positioned so as to be slightly floated above the ground as in an image shown in FIG. 8. The shadow is preferably floated such that a viewer does not feel unnatural (such that a viewer does not recognize that the shadow is floated) when the virtual camera is moved close to the shadow so as to perform rendering. Therefore, the shadow is positioned so as to be substantially close to the ground. Under this assumption, the following processing is performed in the present embodiment.

In the processing according to the present embodiment, polygons to be rendered (in a frame) are classified into two types. One is referred to as a normal polygon, and the other is referred to as a floated polygon. For example, in an example shown in FIG. 8, the windmill object 101 and a ground (topography) object are formed by the normal polygons, and a polygon, such as the polygon 102 for the shadow, which is slightly floated is the floatedpolygon.

A rendering process for the normal polygon, and a rendering process for the floated polygon are separately performed. At this time, at least one of a near value and a far value of a clip space (hereinafter, also referred to as a view volume) used in the perspective projection transformation in the rendering process for the floated polygon, is set to a value which is greater than a value used in the perspective transformation process for the normal polygon (that is, set to such a value as to increase a distance from the virtual camera).

The processing will be described in detail. Initially, the rendering process (rendering pipeline) according to the present embodiment is performed by using the following rendering manner. Specifically, performed is a processing based on a so-called vertex shader including a transformation (so-called world transformation) from local coordinates to world coordinates, a transformation (so-called viewing transformation) from the world coordinates to camera coordinates, a clipping process, the perspective projection transformation (so-called projection transformation), a transformation (so-called view port transformation, which is also referred to as a screen transformation) to screen coordinates. Thereafter, rasterization is performed, and a processing based on a so-called pixel shader (texture mapping, so-called depth test, an alpha text, and the like) is performed.

In the present embodiment, the normal polygon is firstly rendered in the processing described above. At this time, in the clipping process performed in the projection transformation, predetermined values are used as the far value and the near value, respectively, of the clip space.

The floated polygon is secondly rendered in the same processing as described above. At this time, however, as the far value and/or the near value of the clip space, a value (values) different from the value (s) used for the normal polygon is (are) used, in the present embodiment. More specifically, at least one of the near value (representing a near clip plane) and the far value (representing a far clip plane) is set to such a value as to represent a deeper position at which the distance from the camera is increased (for example, see FIG. 9. FIG. 9 shows an exemplary case in which both the near value and the far value are set to such values as to represent deeper positions at which the distances, respectively, from the camera are increased). Thus, it is certain that, as a result of the depth test performed in the processing based on the pixel shader, the floated polygon is determined as being positioned in front of the normal polygon, as described below.

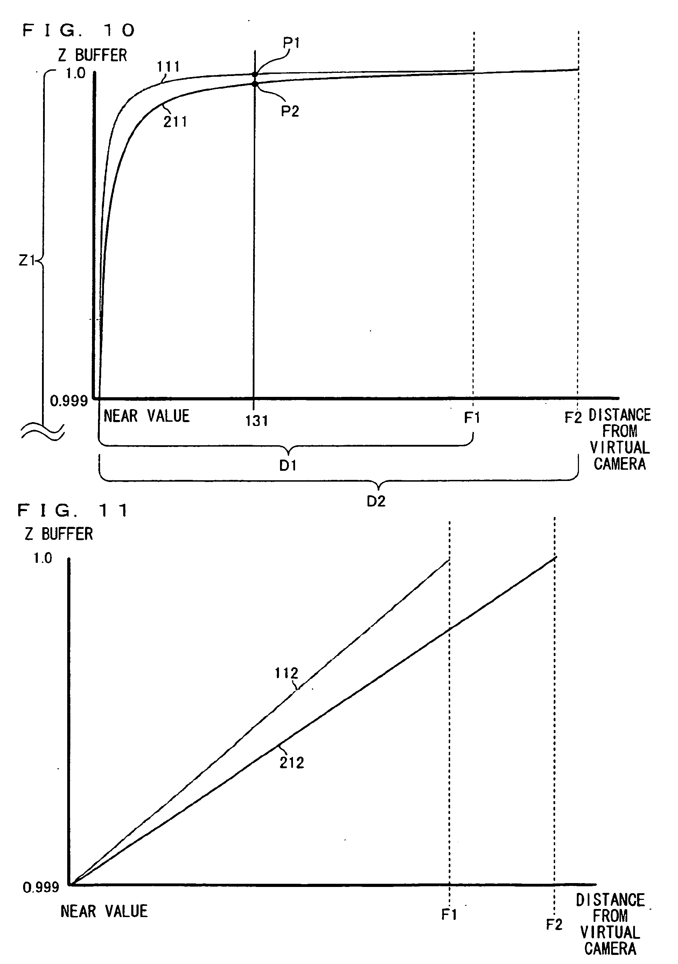

The settings of the far value and the near value will be described with reference to graphs shown in FIGS. 10 to 15. FIG. 10 shows a graph representing a change in Z value (depth value) obtained when only the far value used is different between the processing for the normal polygon and the processing for the floated polygon. In FIG. 10, the longitudinal axis represents Z buffer values, and the horizontal axis represents distances from the virtual camera (in FIG. 10, the longitudinal axis represents values ranging from 0.999 to 1.0 because, if the longitudinal axis represents values ranging from 0 to 1.0, the graph is squashed, and becomes difficult to read). Firstly, when the perspective projection transformation for the normal polygon is performed, the far value of the clip space is set to, for example, a far value F1 shown in FIG. 10. The Z value is calculated by using Equation 1 described above. In this case, the Z values are represented by a curved line 111. On the other hand, when the perspective projection transformation for the floated polygon is performed, the far value is set to a far value F2 representing such a value as to increase the distance from the virtual camera. Therefore, in this case, the Z values are represented by a curved line 211. That is, when the far value F1 is used (for the processing for the normal polygon), the graph indicates that the near value to the far value F1 corresponding to a length D1 are allocated to a range Z1 of the Z buffer values represented by the longitudinal axis. On the other hand, when the far value F2 is used (for the processing for the floated polygon), the near value to the far value F2 corresponding to a length D2 are allocated to the range Z1 of the Z buffer values. As a result, the curved line 211 represented by the Z values for processing the floated polygon is extended slightly in the right direction as compared to the curved line 111 for the normal polygon. Consequently, in the graph, the line for the floated polygon is shifted downward as compared to the line for the normal polygon.

As a result, for example, at a point P131, shown in FIG. 10, representing a distance from the virtual camera in a virtual space, the Z value which is set for a floated polygon is calculated as a value (point P2) representing a position which is in front of a position represented by the Z value (point P1) for the normal polygon (for which the far value is represented as F1).

For easier understanding, in FIG. 11, a relationship, between the Z value and the distance from the virtual camera, which is obtained when the far value F1 is used, and a relationship, between the Z value and the distance from the virtual camera, which is obtained when the far value F2 is used, are represented by using a linear function. In FIG. 11, a straight line 112 corresponds to the curved line 111 shown in FIG. 10, and a straight line 212 corresponds to the curved line 211 shown in FIG. 10. As indicated in the graph, the Z values obtained when the far value F1 is used are clearly different from the Z values obtained when the far value F2 is used, at the same position, in the three-dimensional virtual space, which is distant from the virtual camera. That is, the Z value which is calculated when the perspective projection transformation using the far value F2 is performed represents a position which is in front of a position represented by the Z value which is calculated when the perspective projection transformation using the far value F1 is performed.

As described above, in the present embodiment, polygons to be rendered in one frame are classified into the normal polygon and the floated polygon. The near value and the far value of the clip space used for performing the perspective projection transformation for the normal polygon, are set so as to be different from the near value and the far value of the clip space used for performing the perspective projection transformation for the floated polygon. Thus, it is certain that, as a result of the depth test performed in a following process (the processing based on the pixel shader), the floated polygon is determined as being positioned in front of (closer to the virtual camera than) the normal polygon in the virtual space, without moving or transforming the floated polygon. Therefore, it is possible to prevent flickering caused by an error in Z value stored in the Z buffer from occurring between the normal polygon and the floated polygon which are positioned substantially close to each other.

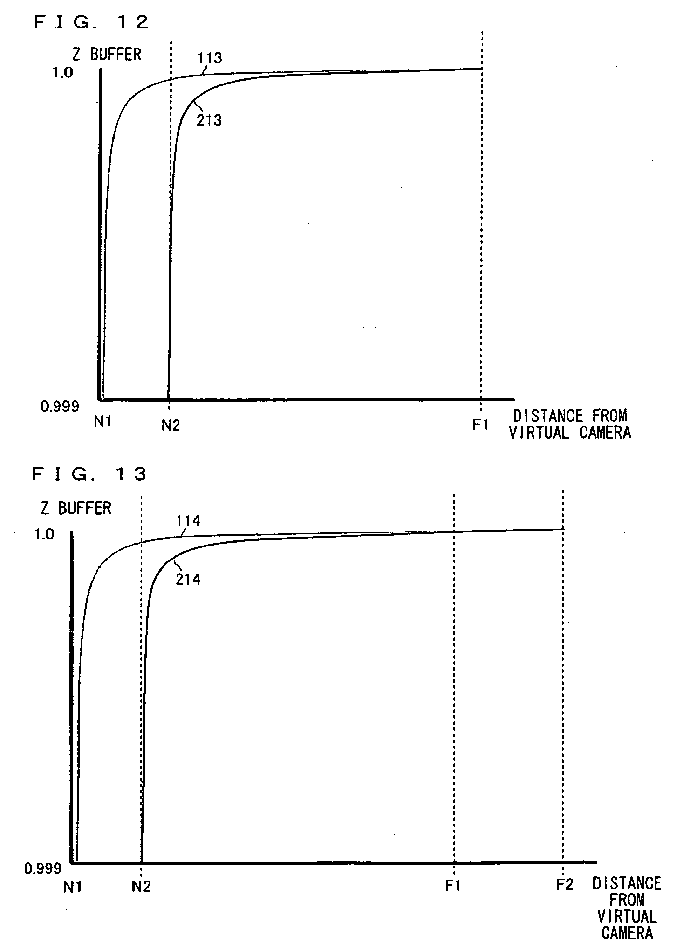

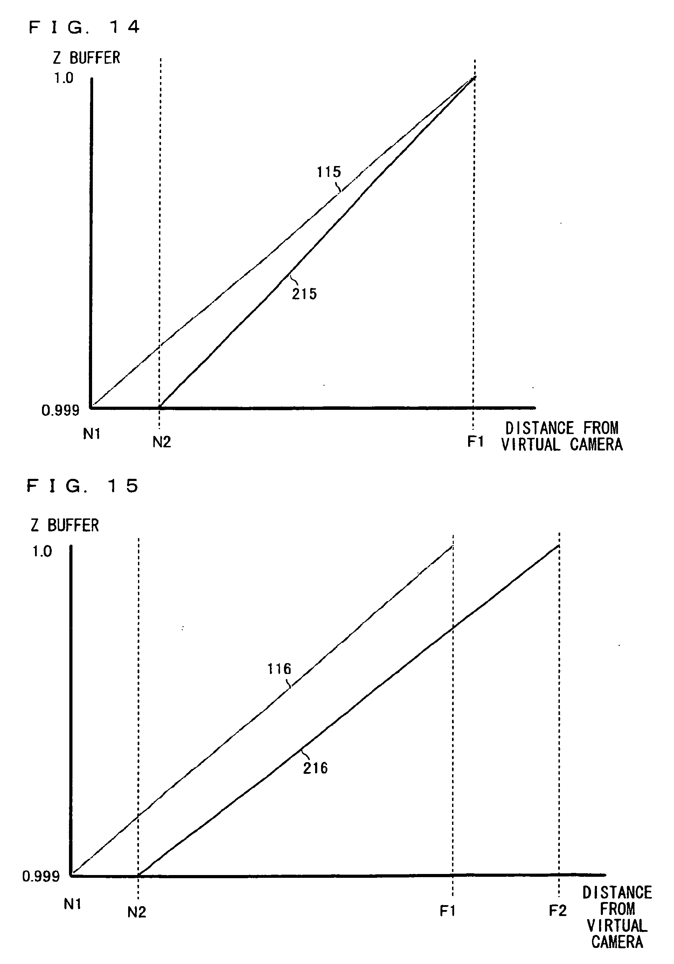

In the example shown in FIG. 10, an exemplary case where only the far value used is different between the processing for the normal polygon and the processing for the floated polygon is described. However, also when only the near value used is different between the processing for the normal polygon and the processing the floated polygon, the Z value of the floated polygon is similarly calculated as a value representing a position in front of a position represented by the Z value of the normal polygon. FIG. 12 is a graph showing an exemplary case where only the near value used is different between the processing for the normal polygon and the processing for the floated polygon (that is, a case where the near value for processing the normal polygon is a near value N1, and the near value for processing the floated polygon is a near value N2 in FIG. 12). In FIG. 12, a curved line 113 represents the Z values for processing the normal polygon, and a curved line 213 represents the Z values for processing the floated polygon. Further, FIG. 13 is a graph showing a case where both the near value and the far value used are different between the processing for the normal polygon and the processing for the floated polygon. Also in this case, the similar result to that described above can be obtained. In FIG. 13, a curved line 114 represents the Z values for processing the normal polygon, and a curved line 214 represents the Z values for processing the floated polygon. For reference, in FIG. 14, the graph shown in FIG. 12 is represented as a linear function, and, in FIG. 15, the graph shown in FIG. 13 is represented as a linear function. A straight line 115 shown in FIG. 14 corresponds to the curved line 113 shown in FIG. 12, and a straight line 215 shown in FIG. 14 corresponds to the curved line 213 shown in FIG. 12. Further, a straight line 116 shown in FIG. 15 corresponds to the curved line 114 shown in FIG. 13, and a straight line 216 shown in FIG. 15 corresponds to the curved line 214 shown in FIG. 13. In both cases, the Z values for a polygon which is processed as the floated polygon represent positions which are closer to the virtual camera than the Z values for a polygon which is processed as the normal polygon even when the polygon which is processed as the floated polygon and the polygon which is processed as the normal polygon are positioned at the same position (at the same coordinate point in the depth direction) in the virtual three-dimensional space.

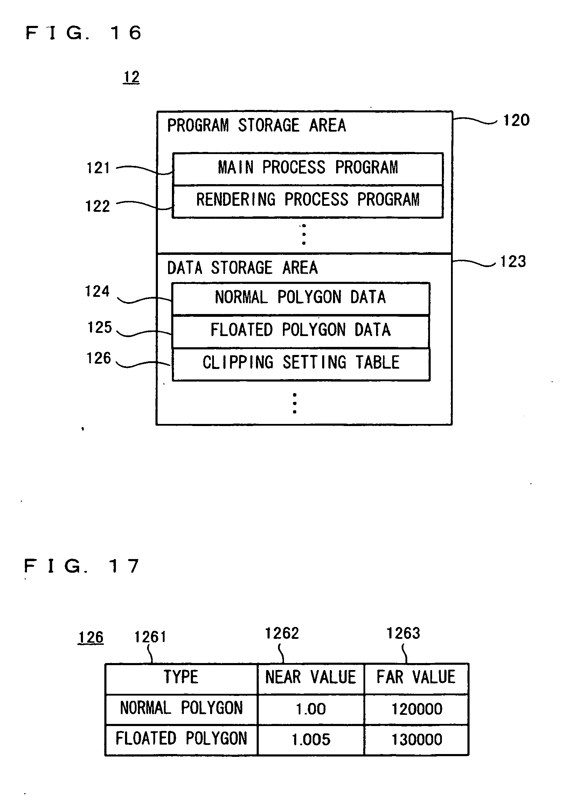

Next, a game process as an exemplary image processing performed by the game apparatus 3 will be described in detail. Initially, data which is stored in the external main memory 12 in the game process will be described. FIG. 16 is a diagram illustrating a memory map of the main memory 12 of the game apparatus 3. In FIG. 16, the external main memory 12 includes a program storage area 120 and a data storage area 123. Data of the program storage area 120 and the data storage area 123 are stored in the optical disc 4, and the data are loaded to the external main memory 12 when a game process program is executed.

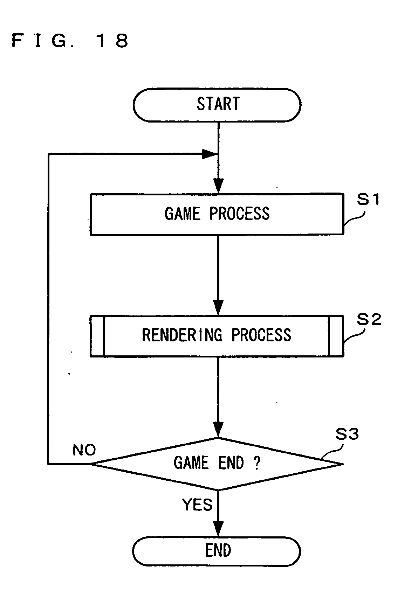

The program storage area 120 stores a game program executed by the CPU 10, and the game program includes a main process program 121, a rendering process program 122, and the like. The main process program 121 is a program for performing a processing shown in a flow chart of FIG. 18. The rendering process program 122 is a program for causing the CPU 10 to perform a processing for rendering a state of the virtual three-dimensional space as a game screen.

The data storage area 123 stores data such as normal polygon data 124, floated polygon data 125, a clipping setting table 126, and other data necessary for the game process.

The normal polygon data 124 is data (vertex data, texture data, and the like) representing a model of a polygon classified as the normal polygon. Specifically, the normal polygon data 124 is data for polygons representing a topography obj ect, the windmill object 101, and the like.

The floated polygon data 125 is data representing a model of a polygon classified as the floated polygon. Specifically, the floated polygon data 125 is data for polygons, such as the polygon 102 for a shadow, which are positioned so as to be slightly floated above the ground in the virtual space.

The clipping setting table 126 defines the near value and the far value of the clip space used for rendering the normal polygon, and the near value and the far value of the clip space used for rendering the floated polygon. FIG. 17 is a diagram illustrating an exemplary data structure of the clipping setting table 126. In the clipping setting table 126 shown in FIG. 17, a type 1261, a near value 1262, and a far value 1263 are indicated. In an example shown in FIG. 17, the near value used for rendering the normal polygon is defined as 1.00, and the far value used for rendering the normal polygon is defined as 120000. On the other hand, the near value used for rendering the floated polygon is defined as 1.005, and the far value used for rendering the floated polygon is defined as 130000.

Next, the game process performed as an exemplary rendering process by the game apparatus 3 will be described with reference to FIG. 18 to FIG. 20. When the game apparatus 3 is powered on, the CPU 10 of the game apparatus 3 executes a boot program stored in the ROM/RTC 13, so as to initialize the respective units such as the external main memory 12. The game program stored in the optical disc 4 is loaded to the external main memory 12, and the CPU 10 starts to execute the game program. The flow chart shown in FIG. 18 is a flow chart showing game process performed after the process described above is completed. Further, a process loop of steps S1 to S3 shown in FIG. 18 is repeated in each frame.

As shown in FIG. 18, firstly, in step S1, the game process is performed. In this process, the CPU 10 acquires operation data from a player, and performs a game process based on the operation data. Specifically, various processes associated with the game, including movement of the virtual camera and various objects in the virtual space, change of orientations of the objects, and the like, are performed.

Next, in step S2, the rendering process for rendering a state of the virtual game space based on the process performed in step S1 is performed.

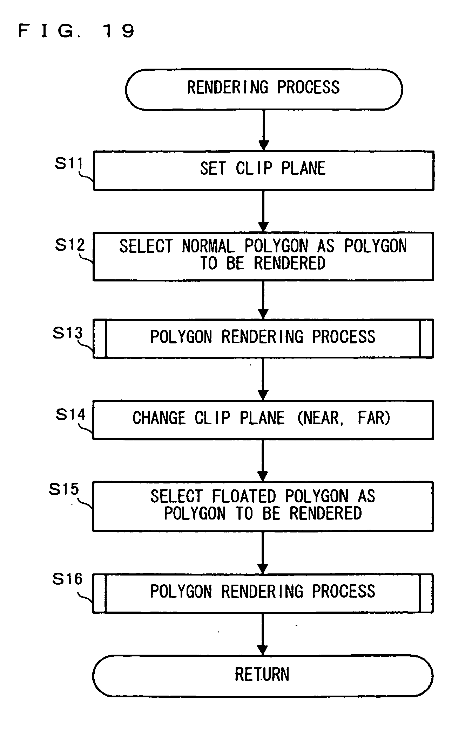

FIG. 19 is a flow chart showing in detail the rendering process of step S2. In the rendering process, initially, the polygon rendering process for the normal polygon is performed as described above, and thereafter the polygon rendering process for the floated polygon is performed as described above.

As shown in FIG. 19, initially, in step S11, a process for setting a clip plane of a clip space used for rendering the normal polygon is performed. Specifically, the CPU 10 reads, from the clipping setting table 126, data (the near value 1262, and the far value 1263) of the type 1261 indicating "normal polygon". The near value 1262 and the far value 1263 are set as the near value and the far value, respectively, of the clip space. In an example in which the clipping setting table 126 shown in FIG. 17 is used, the near value is set to 1.0, and the far value is set to 120000. Further, parameters, such as an angle of view and an aspect ratio, other than the near value and the far value, are set.

Next, in step S12, the "normal polygon" is selected as a polygon to be rendered. Specifically, the CPU 10 designates the normal polygon data 124 as polygon data used for rendering a polygon as described below (as data used in the processing based on the vertex shader described below).

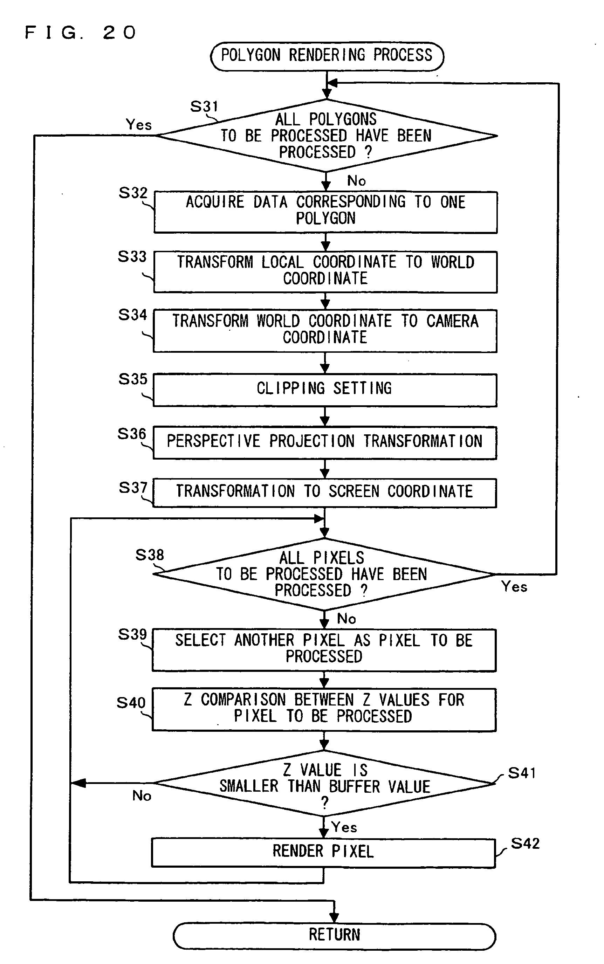

Next, in step S13, the polygon rendering process for the normal polygon is performed. FIG. 20 is a flow chart showing in detail the polygon rendering process of step S13. The polygon rendering process is mainly divided into a processing based on a so-called vertex shader (steps S31 to S37 shown in FIG. 20) performed for each polygon, and a processing based on a so-called pixel shader (steps S38 to S42 shown in FIG. 20) performed for each polygon. The polygon rendering process may be performed by the GPU 11b or the CPU 10. In the present embodiment, the polygon rendering process is performed by the CPU 10.

As shown in FIG. 20, firstly, in step S31, whether or not all polygon data to be processed has been processed (at this time, whether or not the polygons represented by all the normal polygon data 124 have been processed) is determined. More specifically, whether or not all the polygon data included in the normal polygon data 124 have been read and subjected to the processing based on the vertex shader is determined.

Next, in step S32, data corresponding to one polygon is read from the normal polygon data 124 (data corresponding to one polygon is selected from among polygon data which are not processed).

Subsequently, in step S33, coordinate transformation (world transformation) from a local coordinate to a world coordinate is performed for the read one polygon. Further, in step S34, coordinate transformation (viewing transformation) from the world coordinate to a camera coordinate is performed.

Next, the projection transformation is performed. Firstly, in step S35, the clip space is set by using the near value and the far value (the near value is 1. 0 and the far value is 120000 in this case) set in step S11.

Next, in step S36, the perspective projection transformation is performed. A Z coordinate value Zclip, of the clip space, for the polygon to be processed is calculated by using, for example, the following equation.

$$\texttt{Zclip=Zeye×(-n)/(f-n)-f×n/(f-n)}$$

wherein a variable n represents a positive distance (that is, the near value) to a near clip plane, a variable f represents a positive distance (that is, the far value ) to a far clip plane, and a variable Zeye represents a Z coordinate value of the polygon, to be processed, which has been subjected to the transformation to the camera coordinate.

Next, in step S37, coordinate transformation (viewport transformation) to a coordinate in a screen coordinate system (view port coordinate system) is performed. A Z coordinate value Zscreen, of the screen space, for the polygon to be processed is calculated by using, for example, the following equation.

$$\texttt{Wclip=-Zeye}$$

$$\texttt{Zscreen=Zclip/Wclip + f ··· Equation 2}$$

wherein a variable Wclip represents a so-called W value, that is, a value representing a scale of a view volume (a value of a homogeneous coordinate system).

After the transformation to the screen coordinate, a processing based on the pixel shader for the polygon is then performed (step S38 to S42). Initially, in step S38, whether or not all the pixels (that is, the pixels of the polygon being currently processed) to be processed have been processed is determined. When the result of the determination indicates that all the pixels have not been processed (No in step S38), a pixel to be processed is selected (a pixel to be firstly processed is selected when a process loop of the processing based on the pixel shader is started) in step S39.

Next, a so-called depth test (Z test) is performed. Specifically, in step S40, the Z value of the pixel being currently processed is compared with the Z value stored in the Z buffer. In the present embodiment, the Z values stored in the Z buffer range from 0.0 (representing a position near the virtual camera) to 1.0 (representing a deeper position). Subsequently, in step S41, whether or not the Z value of the pixel being currently processed is smaller than the Z value stored in the Z buffer (that is, whether or not the Z value of the pixel being currently processed represents a position closer to the virtual camera than the Z value stored in the Z buffer) is determined. When the result of the determination indicates that the Z value of the pixel being currently processed is smaller than the Z value stored in the Z buffer (YES in step S41), a process for rendering the pixel is performed in step S42. Thereafter, the process is returned to step S38, and the same process step as described above is repeated. On the other hand, when the result of the determination of step S41 indicates that the Z value of the pixel being currently processed is not smaller than the Z value stored in the Z buffer (NO in step S41), the process step of step S42 is not performed (that is, the pixel is not rendered), and the process is returned to step S38, and the same process step as described above is repeated.

On the other hand, when a result of the determination of step S38 indicates that all the pixels to be processed have been processed (YES in step S38), it means that the processing based on the pixel shader for the polygon being currently processed is completed. Therefore, the process is returned to step S31, and the same process step as described above is repeated. Specifically, the processing based on the vertex shader and the processing based on the pixel shader for a polygon which has not been processed are performed.

When a result of the determination of step S31 indicates that the processing based on the vertex shader for all the polygons (normal polygons in this case) to be processed has been performed (YES in step S31), the polygon rendering process is ended.

Returning to FIG. 19, after the rendering process for the normal polygon is ended, the rendering process for the floated polygon is then performed. Initially, in step S14, a process for changing values of the clip plane to values of the clip plane for the floated polygon is performed. Specifically, the CPU 10 reads, from the clipping setting table 126, data (the near value 1262 and the far value 1263) for type 1261 indicating "floated polygon", and the near value 1262 and the far value 1263 are set as the near value and the far value, respectively, of the clip space. In the example in which the clipping setting table 126 shown in FIG. 17 is used, the near value is set to 1.005, and the far value is set to 130000.

Next, in step S15, the "floated polygon" is selected as a polygon to be rendered. Specifically, the CPU 10 designates the floated polygon data 125 as polygon data used for rendering a polygon.

Next, in step S16, the polygon rendering process for the floated polygon is performed. The polygon rendering process for the floated polygon is similar to the polygon rendering process of step S13 described above. Therefore, detailed description is not given. However, the polygon rendering process of step S16 is different from the polygon rendering process of step S13 in the following points. That is, in step S16, a polygon to be processed is the floated polygon, and the clip space based on the near value and the far value which are set in step S14 for the floated polygon is used in the perspective projection transformation of step S36. Therefore, a value representing a position which is closer to the virtual camera than a position represented by the Z value of the normal polygon is calculated as the Z value of the floated polygon as shown in the graph of FIG. 10, and the like. Consequently, it is certain that, as a result of the depth test, (a pixel of) the floated polygon being processed is determined as being closer to the virtual camera than the normal polygon adjacent to the floated polygon being processed. For example, when a polygon of the ground and a polygon of a shadow put on the polygon of the ground are rendered as the normal polygon and the floated polygon, respectively, the polygon of the shadow is not determined as being below the ground (as being at a position deeper than the normal polygon as viewed from the virtual camera) . Therefore, it is possible to prevent a state where the polygon of the shadow is not rendered (that is, flickering can be prevented) .

When the rendering process of step S16 for the floated polygon is completed, the polygon rendering process is ended.

Returning to FIG. 18, when the rendering process of step S2 is ended, whether or not the game is to be ended is determined in step S3. When the determination result indicates YES, the game process is ended, and when the determination result indicates NO, the process is returned to step S1, and the game process is repeated. This is the end of the game process of the present embodiment.

As described above, in the present embodiment, the polygons to be rendered are classified into the normal polygon and the floated polygon. The near value and the far value of the clip space are set so as to be different between the normal polygon and the floated polygon, and, for example, the perspective projection transformation for the normal polygon and the perspective projection transformation for the floated polygon are performed separately from each other based on the respective clip spaces. Therefore, it is certain that, as a result of the depth test, the floated polygon is determined as being closer to the virtual camera than the normal polygon as compared to a case where the perspective projection transformation for the floated polygon and the perspective projection transformation for the normal polygon are performed by using a common clip space (the same near value and far value are used for both the floated polygon and the normal polygon). In other words, in the depth test, the floated polygon can be determined as having been shifted toward the virtual camera. As a result, for example, when the normal polygon and the floated polygon which have close relationship, such as a relationship between a ground polygon and a shadow polygon, are to be rendered, the floated polygon can be rendered with enhanced accuracy. In other words, it is possible to prevent a state where the floated polygon is not rendered due to the floated polygon being positioned at a position deeper than the normal polygon, thereby preventing flickering caused by an error in Z value stored in the Z buffer.

In addition, it is easy to change the settings of the near value and the far value of the clip space used in the perspective transformation process. Therefore, the number of times processing is performed is not increased depending on the number of polygons. Therefore, processing costs necessary for the rendering process is not substantially increased.

Further, a position of the floated polygon is not changed in the world coordinate system or a contour of the floated polygon is not changed in order to prevent the flickering. Therefore, designs and images intended by a game creator can be represented with enhanced accuracy.

(Second embodiment)

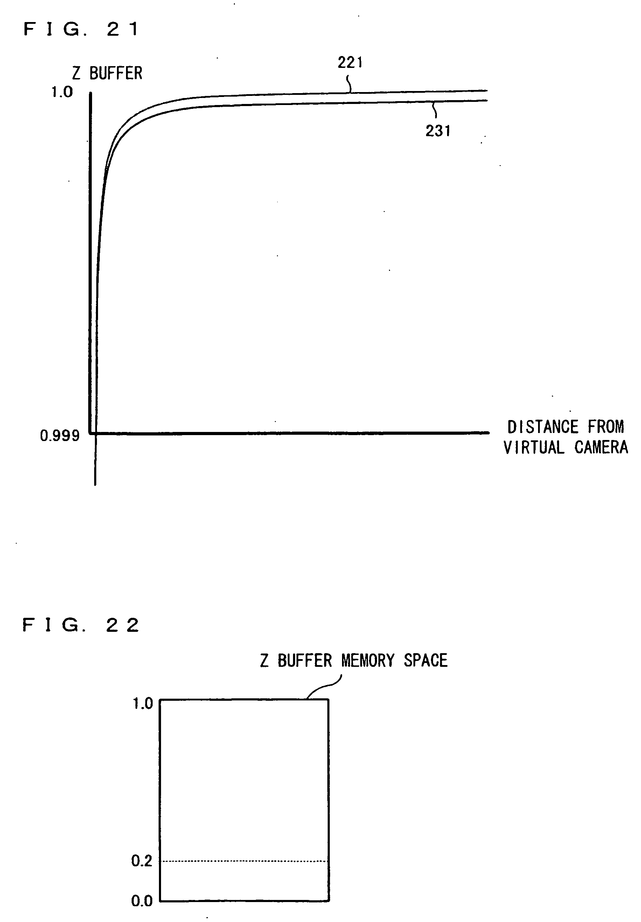

Next, a second embodiment of the present invention will be described with reference to FIG. 21 to FIG. 23. In the first embodiment, the near value and the far value of the clip space used for processing the floated polygon are set so as to be different from the near value and the far value of the clip space used for processing the normal polygon, thereby performing the perspective projection transformation and the like. On the other hand, a predetermined offset is added to a calculated Z value in the second embodiment, thereby obtaining the same effect as obtained in the first embodiment. The game apparatus used in the second embodiment is the same as used in the first embodiment, and the same reference numerals are used and the detailed description is not given.

A concept of a processing according to the second embodiment will be described with reference to FIG. 21. In the second embodiment, the offset is added to a curved line 221 represented by the Z values which are obtained in the processing for the normal polygon, so as to shift the curved line vertically downward, thereby obtaining a curved line 231. The Z values represented by the curved line 231 are used as the Z values for the floated polygon. As a result, as in the first embodiment, a result of the depth test indicates that the floated polygon is shifted toward the virtual camera. Accordingly, as in the first embodiment, it is possible to prevent the flickering caused by an error in Z value stored in the Z buffer.

The curved line 231 shown in FIG. 21 can be obtained by using, for example, the following equation.

$$Z = (1+D) + n \times (1 + f/Cz) / (f-n)$$

wherein a variable Z represents a Z value; a variable D represents a negative constant offset value; a variable Cz represents a Z component in the camera space coordinate system; a variable n represents the near value of the clip space; and a variable f represents the far value of the clip space.

A negative value is set as the variable D, and therefore the near value represents a position at which a distance from the virtual camera is reduced. However, a minimum value of a Z buffer memory space is 0. Therefore, a value below zero is set to zero. For example, when a negative offset of 0.2 is added, values ranging from 0.0 to 1.0 shifts to values ranging from -0.2 to 0.8. At this time, values below zero are set to zero, and values ranging from 0.0 to 0.8 are used.

Next, a processing according to the second embodiment will be described in detail. Firstly, in the present embodiment, a function as described below needs to be implemented as hardware or software in order to realize the processing as described above. Specifically, it is necessary to implement a function for defining association between a Z buffer memory space, and the near value and far value of the clip space, as described below.

The function will be described. For example, the Z buffer memory space represents values ranging from 0.0 to 1.0 as shown in FIG. 22. In this case, the function described above is a function for allocating only a part of the memory space to the clip space. For example, in general, a value representing a position of a near clip plane is set as 0.0, and a value representing a position of a far clip plane is set as 1.0. However, the value representing the position of the near clip plane may be set as 0.2, and the value representing the position of the far clip plane may be set as 1.0. In this case, an object (for example, subtitles) which is not included in the virtual space may be rendered at a position represented by a value ranging from 0.0 to 0.2, so as to always display the object at a shallower position. When, by using the function, the Z buffer memory space ranging from 0.0 to 1.0 is allocated to the Z values for rendering the normal polygon, and the Z buffer memory space ranging from 0.0 to 0.2 is allocated to the Z values for rendering the floated polygon, the floated polygon may be displayed in front of the normal polygon. That is, the Z values used for the floated polygon are adjusted so as to range from 0.0 to 0.2. At this time, the offset is 0.8. However, the offset may be a value for determining a positional relationship between the polygons. Therefore, the offset may be set to a substantially small value in practice. For example, the offset may be a value which is several times as great as a minimum accuracy of Z. The Z values are adjusted in the following manner. Specifically, as described above, when the Z value having the offset added thereto represents a value below 0, the Z value is set to 0.0, and when the Z value having the offset added thereto represents a value above 1.0, the Z value is set to 1.0. Alternatively, both the offset and the range of the Z values may be reduced such that the Z values range from 0.0 to 0.2. In the present embodiment, in the rendering process for the normal polygon, the process (specifically, a process for setting variables Vn and Vf as described below) for setting allocation of the Z buffer memory space as described above is performed. The same effect as obtained when an offset is added to the Z value can be obtained by changing the allocation of the Z buffer memory space. In the rendering process for the floated polygon, a predetermined offset is added so as to set the allocation as described above, and thereafter the rendering process for the floated polygon is performed. That is, when the floated polygon is processed, the curved line 221 (the curved line represented by the Z values calculated for the settingofthenormalpolygon) shown in FIG. 21 is shifted vertically downward by an amount represented by the offset so as to obtain the curved line 231.

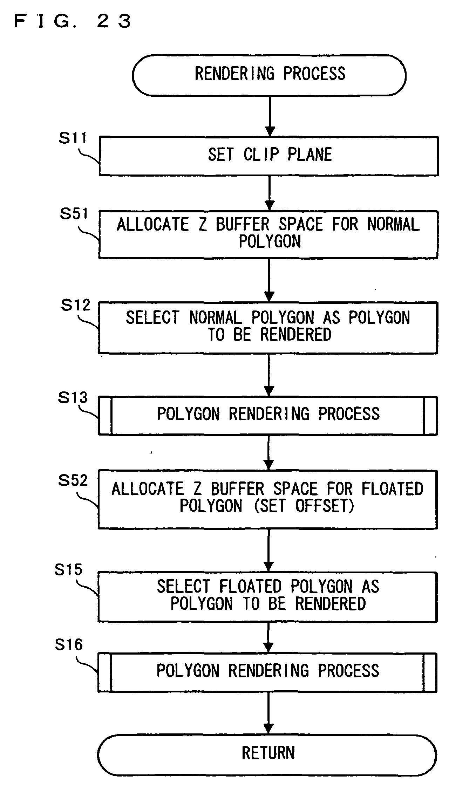

Next, the process according to the second embodiment will be described in detail. Although a flow of a fundamental process is the same as described for the first embodiment, a process shown in FIG. 23, instead of the rendering process which is described with reference to FIG. 19 in the first embodiment, is performed in the second embodiment. As shown in FIG. 23, firstly, in step S11, a process for setting clip planes of a clip space used for rendering the normal polygon is performed. Specifically, the near value and the far value of the clip space are set.

Next, in step S51, the allocation of the Z buffer space for the normal polygon is performed. For example, when the Z buffer memory space represents values ranging from 0.0 to 1.0 (which is a range of the Z values), a process for allocating the overall range of values for the normal polygon is performed. In the present embodiment, an exemplary case where a variable Vn and a variable Vf are used as variables for allocation of the memory space will be described. The variable Vn represents a value, in the Z buffer memory space, corresponding to the near value of the clip space. The variable Vf represents a value, in the Z buffer memory space, corresponding to the far value of the clip space. These variables are used in a process described below.

In order to set the allocation, the range may be explicitly specified as described above, or all the range may be designated as an initial value without explicitly specifying the range to be allocated.

Next, in step S12, as in the first embodiment, the "normal polygon" is selected as a polygon to be rendered.

Next, in step S13, the polygon rendering process as described with reference to FIG. 20 in the first embodiment is performed. However, in the second embodiment, a Z coordinate value Zscreen of the polygon to be processed is calculated in step S37 by using, for example, the following equation using the variables Vn and Vf, instead of Equation 2.

$$Zscreen = Zclip/Wclip \times (Vf-Vn)+Vf \cdots \text{Equation 3}$$

When the rendering process for the normal polygon is completed, the allocation of the Z buffer space for the floated polygon is performed, that is, the offset as described above is set, in step S52. Specifically, initially, a predetermined value is set as a variable offset (for example, a value which is eight times as great as a maximum accuracy of the Z value is set as the variable offset). Next, the variable Vn and the variable Vf are calculated by using the following equation.

$$Vn = Vn + offset$$

$$Vf = Vf + offset$$

As described above, an offset is added to each of the variables Vn and Vf, thereby setting the offset as described above.

Next, in step S15, the "floated polygon" is selected as a polygon to be rendered in the same manner as described for the first embodiment.

Next, in step S16, the polygon rendering process for the floated polygon is performed. The offset is set in step S52, and therefore a value of Zscreen which is calculated by using Equation 3 contains the offset, thereby obtaining the curved line 231 shown in FIG. 21. That is, values representing positions which are shifted toward the virtual camera are calculated as the Z values, resulting in the same effect as described in the first embodiment being obtained.

As described above, in the second embodiment, although the near value and the far value are the same between the normal polygon and the floated polygon, an offset is added to the Z value in the processing for the floated polygon. Thus, as in the first embodiment, the depth test is performed in a state where the floated polygon is shifted toward the virtual camera, thereby preventing the flickering caused by an error in Z value stored in the Z buffer.

In each embodiment, the floated polygon is, for example, positioned so as to be slightly floated above the ground polygon (when, for example, the floated polygon and the ground polygon are positioned adjacent to each other). However, the floated polygon and the normal polygonmaybe positioned at the same position (at the same depth position). That is, even when the floated polygon is not "floated", a result of the depth test indicates that the floated polygon is shifted toward the virtual camera, by performing the processing as described above.

Further, the floated polygon may be rendered so as to be displayed translucent. Thus, a portion of the normal polygon which is hidden behind the floated polygon may be visually confirmed, thereby generating and displaying an image with enhanced reality.

Further, as the order in which the rendering process steps are performed, the order in which the normal polygon is firstly rendered and thereafter the floated polygon is rendered is used in the embodiments. However, when the translucent display as described above is not used, the order of the rendering process steps may be opposite to that described in the embodiments. In the processing as described above, it is certain that, as a result of the depth test, the floated polygon is determined as being closer to the virtual camera than the normal polygon. Therefore, also when the normal polygon is rendered after the floated polygon is rendered, the same effect can be obtained.

In each embodiment, data for the normal polygon and data for the floated polygon are stored in a memory as separate data (as the normal polygon data 124 and the floated polygon data 125, respectively). However, each of the data for the normal polygon and the data for the floated polygon may include information for identifying each other. For example, each polygon data may contain information such as a "polygon type". In the rendering process, a content of the "polygon type" is determined, and the polygon rendering process may be performed by using one of the setting (the near value and the far value, offset) for the floated polygon and the setting for the normal polygon, depending on the content of the "polygon type".

Further, the technique of the first embodiment and the technique of the second embodiment may be used in combination with each other. Specifically, the technique (first embodiment) in which the near value and the far value of the clip space used for rendering the normal polygon are set so as to be different from the near value and the far value of the clip space used for rendering the floated polygon, and the technique (second embodiment) in which a predetermined of f set is added to the floated polygon to be rendered may be used in combination with each other.

While the invention has been described in detail, the foregoing description is in all aspects illustrative and not restrictive. It is understood that numerous other modifications and variations can be devised without departing from the scope of the claims of the invention.

## Claims

1. A rendering processing apparatus which renders a three-dimensional virtual space by using a perspective projection transformation and a depth comparison that uses a Z buffer, the rendering processing apparatus comprising:

   first rendering means (10) for performing a first rendering process for rendering at least one first-type polygon included in polygons to be rendered in a rendering process of one frame, the at least one first-type polygon being classified as a first type;
   second rendering means (10) for performing a second rendering process for rendering at least one second-type polygon included in the polygons to be rendered in the rendering process of the one frame, the at least one second-type polygon being classified as a second type; and
   calculation parameter change means (10) for changing a parameter used for calculating, in the perspective projection transformation, a depth value used for the depth comparison that uses the Z buffer such that the depth value calculated in the second rendering process indicates a position which is closer to a virtual camera than the depth value calculated in the first rendering process,
   the second rendering means performing the second rendering process for rendering the at least one second-type polygon by using the parameter acquired from the calculation parameter change means.

2. The rendering processing apparatus according to claim 1, wherein the calculation parameter change means changes the parameter such that at least one of a position of a near clip plane and a position of a far clip plane, both of which are used by the first rendering means, is changed.

3. The rendering processing apparatus according to claim 2, wherein the calculation parameter change means changes the parameter such that a distance between the virtual camera and the at least one of the position of the near clip plane and the position of the far clip plane is increased.

4. The rendering processing apparatus according to claim 1, wherein the calculation parameter change means changes the parameter by setting a predetermined offset value to be added to the depth value calculated in the perspective projection transformation.

5. The rendering processing apparatus according to claim 4, wherein the calculation parameter change means sets the predetermined offset value by changing a parameter indicating a range of values which are stored in the Z buffer and used in the perspective projection transformation.

6. The rendering processing apparatus according to claim 1, wherein the at least one second-type polygon is positioned, in the three-dimensional virtual space, adjacent to a predetermined one of the at least one first-type polygon, so as to be closer to the virtual camera than the predetermined one of the at least one first-type polygon.

7. The rendering processing apparatus according to claim 1, wherein
each of the first rendering process performed by the first rendering means and the second rendering process performed by the second rendering means includes:

> a first transformation process for transforming a coordinate of a polygon in a world coordinate system to a coordinate in a camera coordinate system;
> a second transformation process for subjecting the coordinate in the camera coordinate system to a perspective transformation, the coordinate in the camera coordinate system being obtained through the first transformation process;
> a third transformation process for transforming a coordinate obtained through the perspective transformation, to a coordinate in a view port coordinate system; and
> a Z comparison process for rendering a pixel in accordance with the depth comparison that uses the Z buffer.

8. A computer-readable storage medium having stored therein a rendering processing program executed by a computer of a rendering processing apparatus which renders a three-dimensional virtual space by using a perspective projection transformation and a depth comparison that uses a Z buffer, the computer being caused to function as:

> first rendering means (S11, S12, S13) for performing a first rendering process for rendering at least one first-type polygon included in polygons to be rendered in a rendering process of one frame, the at least one first-type polygon being classified as a first type;
> secondrenderingmeans (S15, S16) forperformingasecond rendering process for rendering at least one second-type polygon included in the polygons to be rendered in the rendering process of the one frame, the at least one second-type polygon being classified as a second type; and
> calculation parameter change means (S14) for changing a parameter used for calculating, in the perspective projection transformation, a depth value used for the depth comparison that uses the Z buffer such that the depth value calculated in the second rendering process indicates a position which is closer to a virtual camera than the depth value calculated in the first rendering process,
> the second rendering means performing the second rendering process for rendering the at least one second-type polygon by using the parameter acquired from the calculation parameter change means.

9. The computer-readable storage medium having stored therein the rendering processing program according to claim 8, wherein the calculation parameter change means changes the parameter such that at least one of a position of a near clip plane and a position of a far clip plane, both of which are used by the first rendering means, is changed.

10. The computer-readable storagemediumhaving stored therein the rendering processing program according to claim 9, wherein the calculation parameter change means changes the parameter such that a distance between the virtual camera and the at least one of the position of the near clip plane and the position of the far clip plane is increased.

11. The computer-readablestorage medium havingstored therein the rendering processing program according to claim 8, wherein the calculation parameter change means changes the parameter by setting a predetermined offset value to be added to the depth value calculated in the perspective projection transformation.

12. The computer-readable storage medium having stored therein the rendering processing program according to claim 11, wherein the calculation parameter change means sets the predetermined offset value by changing a parameter indicating a range of values which are stored in the Z buffer and used in the perspective projection transformation.

13. The computer-readable storage medium having stored therein the rendering processing program according to claim 8, wherein the second rendering means renders the at least one second-type polygon so as to be displayed translucent.

14. The computer-readable storage medium having stored therein the rendering processing program according to claim 8, wherein the at least one second-type polygon is positioned, in the three-dimensional virtual space, adjacent to a predetermined one of the at least one first-type polygon, so as to be closer to the virtual camera than the predetermined one of the at least one first-type polygon.

15. The computer-readable storage medium having stored therein the rendering processing program according to claim 8, wherein
each of the first rendering process performed by the first rendering means and the second rendering process performed by the second rendering means includes:

a first transformation process (S34) for transforming a coordinate of a polygon in a world coordinate system to a coordinate in a camera coordinate system;
a second transformation process (S36) for subjecting the coordinate in the camera coordinate system to a perspective transformation, the coordinate in the camera coordinate system being obtained through the first transformation process;
a third transformation process (S37) for transforming a coordinate obtained through the perspective transformation, to a coordinate in a view port coordinate system; and
a Z comparison process (S40, S41, S42) for.rendering a pixel in accordance with the depth comparison that uses the Z buffer.

## Patentansprüche

1. Verarbeitungseinrichtung für graphische Wiedergabe, die einen dreidimensionalen virtuellen Raum wiedergibt, indem eine perspektivische Projektionstransformation und ein Tiefen-Vergleich durchgeführt werden, der einen Z-Puffer verwendet, wobei die Wiedergabe-Verarbeitungseinrichtung enthält:

erste Wiedergabemittel (10) zum Durchführen eines ersten Wiedergabe-Prozesses, um mindestens ein Polygon ersten Typs wiederzugeben, das in Polygonen enthalten ist, die in einem Wiedergabeprozess eines Einzelbildes wiedergegeben werden sollen, wobei das mindestens eine Polygon ersten Typs als ein erster Typ klassifiziert ist;
zweite Wiedergabemittel (10) zum Durchführen eines zweiten Wiedergabe-Prozesses, um mindestens ein Polygon zweiten Typs wiederzugeben, das in den Polygonen enthalten ist, die im Wiedergabeprozess des einen Einzelbildes wiedergegeben werden sollen, wobei das mindestens eine Polygon zweiten Typs als ein zweiter Typ klassifiziert ist; und
Berechnungsparameter-Änderungsmittel (10) zum Ändern eines Parameters, der in der perspektivischen Projektionstransformation zur Berechnung eines Tiefen-Wertes verwendet wird, der für den Tiefen-Vergleich verwendet wird, der den Z-Puffer verwendet, so dass der Tiefen-Wert, der in dem zweiten Wiedergabeprozess berechnet wird, eine Position anzeigt, die näher zu einer virtuellen Kamera liegt als der Tiefen-Wert, der im dem ersten Wiedergabeprozess berechnet wird,
wobei das zweite Wiedergabemittel den zweiten Wiedergabeprozess zum Wiedergeben des mindestens einen Polygons zweiten Typs durchgeführt, indem der Parameter verwendet wird, der von dem Berechnungsparameter-Änderungsmittel erhalten wurde.

2. Verarbeitungseinrichtung für graphische Wiedergabe gemäß Anspruch 1, worin das Berechnungsparameter-Änderungsmittel den Parameter so ändert, dass mindestens eine aus einer Position einer nahen Clip-Ebene und einer Position einer entfernten Clip-Ebene geändert wird, die beide durch das erste Wiedergabemittel verwendet werden.

3. Verarbeitungseinrichtung für graphische Wiedergabe nach Anspruch 2, worin das Berechnungsparameter-Änderungsmittel den Parameter so ändert, dass ein Abstand zwischen der virtuellen Kamera und dem mindestens einen aus der Position der nahen Clip-Ebene und der Position der entfernten Clip-Ebene erhöht wird.

4. Verarbeitungseinrichtung für graphische Wiedergabe nach Anspruch 1, worin das Berechnungsparameter-Änderungsmittel den Parameter ändert, indem ein vorbestimmter Offsetwert eingestellt wird, der zum Tiefen-Wert addiert werden soll, der in der perspektivischen Projektionstransformation berechnet wurde.

5. Verarbeitungseinrichtung für graphische Wiedergabe gemäß Anspruch 4, worin das Berechnungsparameter-Änderungsmittel den vorbestimmten Offsetwert setzt, indem ein Parameter geändert wird, der einen Bereich von Werten angibt, die im Z-Puffer gespeichert sind und in der perspektivischen Projektionstransformation verwendet werden

6. Verarbeitungseinrichtung für graphische Wiedergabe nach Anspruch 1, worin das mindestens eine Polygon zweiten Typs im dreidimensionalen virtuellen Raum so positioniert ist, dass es benachbart zu einem vorbestimmten des mindestens einen Polygons ersten Typs liegt, so dass es näher zur virtuellen Kamera liegt als das vorbestimmte des mindestens einen Polygons ersten Typs.

**7.** Verarbeitungseinrichtung für graphische Wiedergabe gemäß Anspruch 1, worin
jeder der ersten Wiedergabeprozesse, die durch das erste Wiedergabemittel durchgeführt werden und der zweiten Wiedergabeprozesse, die vom zweiten Wiedergabemittel durchgeführt werden, enthält:

ein erster Transformationsprozess zum Transformieren einer Koordinate eines Polygons in einem Welt-Koordinatensystem in eine Koordinate im einem Kamera-Koordinatensystem;
ein zweiter Transformationsprozess, um die Koordinate im Kamera-Koordinatensystem einer perspektivischen Transformation zu unterwerfen, wobei die Koordinate im Kamera-Koordinatensystem durch den ersten Transformationsprozess erhalten wurde;
ein dritter Transformationsprozess zum Transformieren einer Koordinate, die durch die perspektivische Transformation erhalten wurde, in eine Koordinate in einem Betrachtungsfenster-Koordinatensystem; und
ein Z-Vergleichsprozess zum Wiedergeben eines Pixels gemäß dem Tiefen-Vergleich, der den Z-Puffer verwendet.

**8.** Computerlesbares Speichermedium, auf dem ein Verarbeitungsprogramm zur graphischen Wiedergabe gespeichert ist, das von einem Computer einer Verarbeitungseinrichtung für graphische Wiedergabe ausgeführt wird, die einen dreidimensionalen virtuellen Raum wiedergibt, indem eine perspektivische Projektionstransformation und ein Tiefen-Vergleich durchgeführt werden, der einen Z-Puffer verwendet, so dass der Computer arbeitet als:

erste Wiedergabemittel (S11, S12, S13) zum Durchführen eines ersten Wiedergabe-Prozesses, um mindestens ein Polygon ersten Typs wiederzugeben, das in Polygonen enthalten ist, die in einem Wiedergabeprozess eines Einzelbildes wiedergegeben werden sollen, wobei das mindestens eine Polygon ersten Typs als ein erster Typ klassifiziert ist;
zweite Wiedergabemittel (S15, S16) zum Durchführen eines zweiten Wiedergabe-Prozesses, um mindestens ein Polygon zweiten Typs wiederzugeben, das in den Polygonen enthalten ist, die in dem Wiedergabeprozess des einen Einzelbildes wiedergegeben werden sollen, wobei das mindestens eine Polygon zweiten Typs als ein zweiter Typ klassifiziert ist; und
Berechnungsparameter-Änderungsmittel (S14) zum Ändern eines Parameters, der in der perspektivischen Projektionstransformation zur Berechnung eines Tiefen-Wertes verwendet wird, der für den Tiefen-Vergleich verwendet wird, der den Z-Puffer verwendet, so dass der Tiefen-Wert, der in dem zweiten Wiedergabeprozess berechnet wird, eine Position anzeigt, die näher zu einer virtuellen Kamera liegt als der Tiefen-Wert, der im ersten Wiedergabeprozess berechnet wird,
wobei das zweite Wiedergabemittel den zweiten Wiedergabeprozess zum Wiedergeben des mindestens einen Polygons zweiten Typs durchgeführt, indem der Parameter verwendet wird, der von dem Berechnungsparameter-Änderungsmittel erhalten wurde.

**9.** Computerlesbares Speichermedium, in dem ein Wiedergabe-Verarbeitungsprogramm nach Anspruch 8 gespeichert ist,
worin das Berechnungsparameter-Änderungsmittel den Parameter so ändert, dass mindestens eine aus einer Position einer nahen Clip-Ebene und einer Position einer entfernten Clip-Ebene geändert wird, die beide durch das erste Wiedergabemittel verwendet werden.

**10.** Computerlesbares Speichermedium, in dem ein Wiedergabe-Verarbeitungsprogramm nach Anspruch 9 gespeichert ist, worin das Berechnungsparameter-Änderungsmittel den Parameter so ändert, dass ein Abstand zwischen der virtuellen Kamera und der mindestens einen aus der Position der nahen Clip-Ebene und der Position der entfernten Clip-Ebene erhöht wird.

**11.** Computerlesbares Speichermedium, in dem ein Wiedergabe-Verarbeitungsprogramm nach Anspruch 8 gespeichert ist, worin das Berechnungsparameter-Änderungsmittel den Parameter ändert, indem ein vorbestimmter Offset-wert eingestellt wird, der zum Tiefen-Wert addiert werden soll, der in der perspektivischen Projektionstransformation berechnet wurde.

**12.** Computerlesbares Speichermedium, in dem ein Wiedergabe-Verarbeitungsprogramm nach Anspruch 11 gespeichert ist, worin das Berechnungsparameter-Änderungsmittel den vorbestimmten Offsetwert setzt, indem ein Parameter geändert wird, der einen Bereich von Werten angibt, die im Z-Puffer gespeichert sind und in der perspektivischen Projektionstransformation verwendet werden.

**13.** Computerlesbares Speichermedium, in dem ein Wiedergabe-Verarbeitungsprogramm nach Anspruch 8 gespeichert ist, worin das zweite Wiedergabemittel das mindestens eine Polygon zweiten Typs so wiedergibt, dass es durchscheinend dargestellt wird.

14. Computerlesbares Speichermedium, in dem ein Wiedergabe-Verarbeitungsprogramm nach Anspruch 8 gespeichert ist, worin das mindestens eine Polygon zweiten Typs im dreidimensionalen virtuellen Raum so positioniert ist, dass es benachbart zu einem vorbestimmten des mindestens einen Polygons ersten Typs liegt, so dass es näher zur virtuellen Kamera liegt als das vorbestimmte des mindestens einen Polygons ersten Typs.

15. Computerlesbares Speichermedium, in dem ein Wiedergabe-Verarbeitungsprogramm nach Anspruch 8 gespeichert ist, worin

jeder der ersten Wiedergabeprozesse, die vom ersten Wiedergabemittel durchgeführt werden, und der zweiten Wiedergabeprozesse, die vom zweiten Wiedergabemittel durchgeführt werden, enthält:

ein erster Transformationsprozess (S34) zum Transformieren einer Koordinate eines Polygons in einem Welt-Koordinatensystem in eine Koordinate in einem Kamera-Koordinatensystem;
ein zweiter Transformationsprozess (S36), um die Koordinate im Kamera-Koordinatensystem einer perspektivischen Transformation zu unterwerfen, wobei die Koordinate im Kamera-Koordinatensystem durch den ersten Transformations-prozess erhalten wurde;
ein dritter Transformationsprozess (S37) zum Transformieren einer Koordinate, die durch die perspektivische Transformation erhalten wurde, in eine Koordinate in einem Betrachtungsfenster-Koordinatensystem; und
ein Z-Vergleichsprozess (S40, S41, S42) zum Wiedergeben eines Pixels gemäß dem Tiefen-Vergleich, der den Z-Puffer verwendet.

## Revendications

1. Un dispositif de traitement de restitution qui restitue un espace virtuel tridimensionnel par utilisation d'une transformation de projection en perspective et d'une comparaison de profondeur qui utilise un tampon Z, le dispositif de traitement de restitution comprenant :

des premiers moyens de restitution (10) pour exécuter un premier traitement de restitution pour restituer au moins un premier polygone d'un premier type compris dans des polygones à restituer dans un traitement de restitution d'une trame, le au moins un polygone du premier type étant classé comme étant d'un premier type ;
des seconds moyens de restitution (10) pour exécuter un second traitement de restitution pour restituer au moins un polygone d'un second type compris dans les polygones à restituer par le traitement de restitution de ladite une trame, le au moins un polygone du second type étant classé comme étant d'un second type ; et
des moyens de modification de paramètre de calcul (10) pour modifier un paramètre utilisé pour le calcul, dans la transformation de projection en perspective, d'une valeur de profondeur utilisée pour la comparaison de profondeur qui utilise le tampon Z de sorte que la valeur de profondeur calculée par le second traitement de restitution indique une position qui est plus proche d'une caméra virtuelle que la valeur de profondeur calculée par le premier traitement de restitution,
les seconds moyens de restitution exécutant le second traitement de restitution pour restituer le au moins un polygone du second type par utilisation du paramètre acquis à partir des moyens de modification de paramètre de calcul.

2. Le dispositif de traitement de restitution de la revendication 1, dans lequel les moyens de modification de paramètre de calcul modifient le paramètre de sorte qu'au moins l'une d'entre une position d'un plan de coupe proche et une position d'un plan de coupe lointain, qui toutes deux sont utilisés par les premiers moyens de restitution, soit modifiée.

3. Le dispositif de traitement de restitution de la revendication 2, dans lequel les moyens de modification de paramètre de calcul modifient le paramètre de sorte qu'une distance entre la caméra virtuelle et la au moins une d'entre la position du plan de coupe proche et la position du plan de coupe lointain soit accrue.

4. Le dispositif de traitement de restitution de la revendication 1, dans lequel les moyens de modification de paramètre de calcul modifient le paramètre par ajustement d'une valeur de décalage prédéterminée à ajouter à la valeur de profondeur calculée par la transformation de projection en perspective.

5. Le dispositif de traitement de restitution de la revendication 4, dans lequel les moyens de modification du paramètre de calcul établissent la valeur de décalage prédéterminée par modification d'un paramètre indiquant une plage de valeurs qui sont stockées dans le tampon Z et utilisées dans la transformation de projection en perspective.

6. Le dispositif de traitement de restitution de la revendication 1, dans lequel le au moins un polygone du second type est positionné, dans l'espace virtuel tridimensionnel, adjacent à un polygone prédéterminé du au moins un polygone du premier type, de manière à se trouver plus près de la caméra virtuelle que ledit polygone prédéterminé du au moins un polygone du premier type.

7. Le dispositif de traitement de restitution de la revendication 1, dans lequel :

chacun d'entre le premier traitement de restitution exécuté par les premiers moyens de restitution et le second traitement de restitution exécuté par les seconds moyens de restitution comprend :

un premier traitement de transformation pour transformer une coordonnée d'un polygone dans un système de coordonnées mondiales en une coordonnée dans un système de coordonnées de la caméra ;
un second traitement de transformation pour soumettre la coordonnée dans le système de coordonnées de la caméra à une transformation perspective, la coordonnée dans le système de coordonnées de la caméra étant obtenue par l'intermédiaire du premier traitement de transformation ;
un troisième traitement de transformation pour transformer une coordonnée obtenue par l'intermédiaire de la transformation perspective, en une coordonnée dans un système de coordonnées d'orifice de vision ; et
un traitement de comparaison Z pour restituer un pixel conformément à la comparaison de profondeur qui utilise le tampon Z.

8. Un support de stockage lisible par calculateur dans lequel est stocké un programme de traitement de restitution exécuté par un calculateur d'un dispositif de traitement de restitution qui restitue un espace virtuel tridimensionnel par utilisation d'une transformation de projection en perspective et d'une comparaison de profondeur qui utilise un tampon Z, en faisant en sorte que le calculateur fasse fonction :

de premiers moyens de restitution (S11, S12, S13) pour exécuter un premier traitement de restitution pour restituer au moins un premier polygone d'un premier type compris dans des polygones à restituer dans un traitement de restitution d'une trame, le au moins un polygone du premier type étant classé comme étant d'un premier type ;
de seconds moyens de restitution (S15, S16) pour exécuter un second traitement de restitution pour restituer au moins un polygone d'un second type compris dans les polygones à restituer par le traitement de restitution de ladite une trame, le au moins un polygone du second type étant classé comme étant d'un second type ; et
de moyens de modification de paramètre de calcul (S14) pour modifier un paramètre utilisé pour le calcul, dans la transformation de projection en perspective, d'une valeur de profondeur utilisée pour la comparaison de profondeur qui utilise le tampon Z de sorte que la valeur de profondeur calculée par le second traitement de restitution indique une position qui est plus proche d'une caméra virtuelle que la valeur de profondeur calculée par le premier traitement de restitution,
les seconds moyens de restitution exécutant le second traitement de restitution pour restituer le au moins un polygone du second type par utilisation du paramètre acquis à partir des moyens de modification de paramètre de calcul.

9. Le support de stockage lisible par calculateur dans lequel est stocké le programme de traitement de restitution de la revendication 8, dans lequel les moyens de modification de paramètre de calcul modifient le paramètre de sorte qu'au moins l'une d'entre une position d'un plan de coupe proche et une position d'un plan de coupe lointain, qui toutes deux sont utilisés par les premiers moyens de restitution, soit modifiée.

10. Le support de stockage lisible par calculateur dans lequel est stocké le programme de traitement de restitution de la revendication 9, dans lequel les moyens de modification de paramètre de calcul modifient le paramètre de sorte qu'une distance entre la caméra virtuelle et la au moins une d'entre la position du plan de coupe proche et la position du plan de coupe lointain soit accrue.

11. Le support de stockage lisible par calculateur dans lequel est stocké le programme de traitement de restitution de la revendication 8, dans lequel les moyens de modification de paramètre de calcul modifient le paramètre par ajustement d'une valeur de décalage prédéterminée à ajouter à la valeur de profondeur calculée par la transformation de projection en perspective.

**12.** Le support de stockage lisible par calculateur dans lequel est stocké le programme de traitement de restitution de la revendication 11, dans lequel les moyens de modification du paramètre de calcul établissent la valeur de décalage prédéterminée par modification d'un paramètre indiquant une plage de valeurs qui sont stockées dans le tampon Z et utilisées dans la transformation de projection en perspective.

**13.** Le support de stockage lisible par calculateur dans lequel est stocké le programme de traitement de restitution de la revendication 8, dans lequel les seconds moyens de restitution restituent le au moins un polygone du second type de manière à ce qu'il soit affiché translucide.

**14.** Le support de stockage lisible par calculateur dans lequel est stocké le programme de traitement de restitution de la revendication 8, dans lequel le au moins un polygone du second type est positionné, dans l'espace virtuel tridimensionnel, adjacent à un polygone prédéterminé du au moins un polygone du premier type, de manière à se trouver plus près de la caméra virtuelle que ledit polygone prédéterminé du au moins un polygone du premier type.

**15.** Le support de stockage lisible par calculateur dans lequel est stocké le programme de traitement de restitution de la revendication 8, dans lequel :

chacun d'entre le premier traitement de restitution exécuté par les premiers moyens de restitution et le second traitement de restitution exécuté par les seconds moyens de restitution comprend :

un premier traitement de transformation (S34) pour transformer une coordonnée d'un polygone dans un système de coordonnées mondiales en une coordonnée dans un système de coordonnées de la caméra ; un second traitement de transformation (S36) pour soumettre la coordonnée dans le système de coordonnées de la caméra à une transformation perspective, la coordonnée dans le système de coordonnées de la caméra étant obtenue par l'intermédiaire du premier traitement de transformation ; un troisième traitement de transformation (S37) pour transformer une coordonnée obtenue par l'intermédiaire de la transformation perspective, en une coordonnée dans un système de coordonnées d'orifice de vision ; et un traitement de comparaison Z (S40, S41, S42) pour restituer un pixel conformément à la comparaison de profondeur qui utilise le tampon Z.

F I G.  1

FIG. 2

FIG. 3

F I G. 4

F I G. 5

FIG. 6

F I G. 7

754

7

72

OPERATION
SECTION

701

ACCELERATION
SENSOR

74          744

IMAGE
PICKUP
ELEMENT

IMAGE
PROCESSING
CIRCUIT

IMAGING INFORMATION
CALCULATION SECTION

741      742    743

MICRO-
COMPUTER

751

WIRELESS
MODULE

753

752

MEMORY

COMMUNICATION
SECTION

75

31

F I G. 8

F I G. 9

FAR CLIP PLANE          FAR CLIP PLANE

NEAR CLIP          NEAR CLIP
PLANE              PLANE

VIRTUAL          VIRTUAL
CAMERA           CAMERA

FOR RENDERING          FOR RENDERING
NORMAL POLYGON        FLOATED POLYGON

FIG. 10

FIG. 11

F I G.  1 2

F I G.  1 3

F I G. 1 4

Z BUFFER

1.0

115

215

0.999

N1    N2                    F1    DISTANCE FROM
                                  VIRTUAL CAMERA

F I G. 1 5

Z BUFFER

1.0

116

216

0.999

N1    N2                    F1    F2    DISTANCE
                                        FROM
                                        VIRTUAL
                                        CAMERA

F I G. 1 6

<u>12</u>

| PROGRAM STORAGE AREA | 120 |
|---|---|
| MAIN PROCESS PROGRAM | |
| RENDERING PROCESS PROGRAM | |

121 — MAIN PROCESS PROGRAM

122 — RENDERING PROCESS PROGRAM

⋮

DATA STORAGE AREA — 123

124 — NORMAL POLYGON DATA

125 — FLOATED POLYGON DATA

126 — CLIPPING SETTING TABLE

⋮

F I G. 1 7

<u>126</u>　1261　1262　1263

| TYPE | NEAR VALUE | FAR VALUE |
|---|---|---|
| NORMAL POLYGON | 1.00 | 120000 |
| FLOATED POLYGON | 1.005 | 130000 |

F I G. 1 8

F I G. 1 9

```
            ╭─────────────────────────────╮
            │      RENDERING PROCESS      │
            ╰─────────────────────────────╯
                          │
                          ▼
    S11   ┌─────────────────────────────────┐
          │          SET CLIP PLANE         │
          └─────────────────────────────────┘
                          │
                          ▼
    S12   ┌─────────────────────────────────┐
          │  SELECT NORMAL POLYGON AS POLYGON │
          │          TO BE RENDERED         │
          └─────────────────────────────────┘
                          │
                          ▼
    S13   ┌─┬───────────────────────────┬─┐
          │ │  POLYGON RENDERING PROCESS │ │
          └─┴───────────────────────────┴─┘
                          │
                          ▼
    S14   ┌─────────────────────────────────┐
          │   CHANGE CLIP PLANE (NEAR, FAR) │
          └─────────────────────────────────┘
                          │
                          ▼
    S15   ┌─────────────────────────────────┐
          │   SELECT FLOATED POLYGON AS     │
          │      POLYGON TO BE RENDERED     │
          └─────────────────────────────────┘
                          │
                          ▼
    S16   ┌─┬───────────────────────────┬─┐
          │ │  POLYGON RENDERING PROCESS │ │
          └─┴───────────────────────────┴─┘
                          │
                          ▼
            ╭─────────────────────────────╮
            │            RETURN           │
            ╰─────────────────────────────╯
```

FIG. 20

```
                    ( POLYGON RENDERING PROCESS )
                                  │
                                  ▼◄──────────────────────┐
        S31          ╱────────────────────────╲           │
     Yes  ╱─────────  ALL POLYGONS             ╲          │
    ◄─────╲          TO BE PROCESSED HAVE BEEN  ╱          │
     │      ╲─────────     PROCESSED ?         ╱           │
     │              ╲────────────┬───────────╱             │
     │                           │ No                      │
     │         ┌─────────────────▼─────────────────┐       │
     │    S32  │ ACQUIRE DATA CORRESPONDING TO ONE │       │
     │         │            POLYGON                │       │
     │         └─────────────────┬─────────────────┘       │
     │                           │                         │
     │         ┌─────────────────▼─────────────────┐       │
     │    S33  │ TRANSFORM LOCAL COORDINATE TO WORLD│       │
     │         │            COORDINATE             │       │
     │         └─────────────────┬─────────────────┘       │
     │                           │                         │
     │         ┌─────────────────▼─────────────────┐       │
     │    S34  │ TRANSFORM WORLD COORDINATE TO CAMERA│      │
     │         │            COORDINATE             │       │
     │         └─────────────────┬─────────────────┘       │
     │                           │                         │
     │         ┌─────────────────▼─────────────────┐       │
     │    S35  │         CLIPPING SETTING          │       │
     │         └─────────────────┬─────────────────┘       │
     │                           │                         │
     │         ┌─────────────────▼─────────────────┐       │
     │    S36  │ PERSPECTIVE PROJECTION TRANSFORMATION│     │
     │         └─────────────────┬─────────────────┘       │
     │                           │                         │
     │         ┌─────────────────▼─────────────────┐       │
     │    S37  │ TRANSFORMATION TO SCREEN COORDINATE│       │
     │         └─────────────────┬─────────────────┘       │
     │                           │                         │
     │                           ▼◄───────────┐            │
     │    S38      ╱────────────────────────╲ │            │
     │            ╱   ALL PIXELS             ╲│            │
     │           ╱ TO BE PROCESSED HAVE BEEN  ╲───── Yes ──┘
     │           ╲     PROCESSED ?           ╱
     │            ╲────────────┬───────────╱
     │                         │ No
     │       ┌─────────────────▼─────────────────┐  │
     │  S39  │ SELECT ANOTHER PIXEL AS PIXEL TO BE│  │
     │       │            PROCESSED              │  │
     │       └─────────────────┬─────────────────┘  │
     │                         │                     │
     │       ┌─────────────────▼─────────────────┐  │
     │  S40  │ Z COMPARISON BETWEEN Z VALUES FOR │  │
     │       │       PIXEL TO BE PROCESSED       │  │
     │       └─────────────────┬─────────────────┘  │
     │                         │                     │
     │              ╱────────────────────────╲       │
     │   ◄─────────╱   Z VALUE IS             ╲ S41  │
     │    No       ╲ SMALLER THAN BUFFER VALUE ╱─────┘
     │              ╲          ?              ╱
     │               ╲────────┬─────────────╱
     │                        │ Yes
     │       ┌────────────────▼──────────────────┐
     │       │          RENDER PIXEL             │ S42
     │       └────────────────┬──────────────────┘
     │                        │
     └────────────────────────┘
                              │
                    (       RETURN       )
```

F I G. 2 1

Z BUFFER

1.0

221

231

0.999

DISTANCE FROM
VIRTUAL CAMERA

F I G. 2 2

Z BUFFER MEMORY SPACE

1.0

0.2

0.0

F I G. 2 3

```
              ┌─────────────────────────┐
              │    RENDERING PROCESS     │
              └─────────────────────────┘
                          │
                          ▼
S11  ┌──────────────────────────────────────┐
     │            SET CLIP PLANE             │
     └──────────────────────────────────────┘
                          │
                          ▼
S51  ┌──────────────────────────────────────┐
     │  ALLOCATE Z BUFFER SPACE FOR NORMAL   │
     │               POLYGON                 │
     └──────────────────────────────────────┘
                          │
                          ▼
S12  ┌──────────────────────────────────────┐
     │  SELECT NORMAL POLYGON AS POLYGON     │
     │            TO BE RENDERED             │
     └──────────────────────────────────────┘
                          │
                          ▼
S13  ┌──────────────────────────────────────┐
     ││       POLYGON RENDERING PROCESS     ││
     └──────────────────────────────────────┘
                          │
                          ▼
S52  ┌──────────────────────────────────────┐
     │  ALLOCATE Z BUFFER SPACE FOR FLOATED  │
     │         POLYGON (SET OFFSET)          │
     └──────────────────────────────────────┘
                          │
                          ▼
S15  ┌──────────────────────────────────────┐
     │     SELECT FLOATED POLYGON AS         │
     │        POLYGON TO BE RENDERED         │
     └──────────────────────────────────────┘
                          │
                          ▼
S16  ┌──────────────────────────────────────┐
     ││      POLYGON RENDERING PROCESS      ││
     └──────────────────────────────────────┘
                          │
                          ▼
              ┌─────────────────────────┐
              │         RETURN          │
              └─────────────────────────┘
```

F I G. 2 4

901

902

GROUND OBJECT

F I G.  2 5

FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005173866 A
- US 5742749 A

- US 7119806 B